(19) Europäisches Patentamt
European Patent Office
Office européen des brevets

(11) **EP 3 449 554 B1**

(12) **EUROPÄISCHE PATENTSCHRIFT**

(45) Veröffentlichungstag und Bekanntmachung des Hinweises auf die Patenterteilung:
**18.05.2022 Patentblatt 2022/20**

(21) Anmeldenummer: **17719558.3**

(22) Anmeldetag: **21.04.2017**

(51) Internationale Patentklassifikation (IPC):
**H02M 1/12** (2006.01)     **H02M 7/493** (2007.01)
**H02M 7/539** (2006.01)     **H02M 7/5387** (2007.01)

(52) Gemeinsame Patentklassifikation (CPC):
**H02M 1/12; H02M 7/493; H02M 7/539;**
H02M 7/53871

(86) Internationale Anmeldenummer:
**PCT/EP2017/059557**

(87) Internationale Veröffentlichungsnummer:
**WO 2017/186595 (02.11.2017 Gazette 2017/44)**

(54) **WECHSELRICHTER UND VERFAHREN ZUM ERZEUGEN EINES WECHSELSTROMS**

INVERTER AND METHOD FOR GENERATING AN ALTERNATING CURRENT

ONDULEUR ET PROCÉDÉ POUR GÉNÉRER UN COURANT ALTERNATIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.04.2016 DE 102016107614**

(43) Veröffentlichungstag der Anmeldung:
**06.03.2019 Patentblatt 2019/10**

(73) Patentinhaber: **Wobben Properties GmbH**
**26607 Aurich (DE)**

(72) Erfinder: **GENSIOR, Albrecht**
**01277 Dresden (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**EP-A2- 0 600 312     DE-A1-102014 219 052**
**JP-B2- 2 906 616**

- **MEYER M ET AL: "A HYSTERESIS CURRENT CONTROL FOR PARALLEL CONNECTED LINE-SIDE CONVERTERS OF AN INVERTER LOCOMOTIVE", CONTROL IN POWER ELECTRONICS. BRIGHTON, SEPT. 13 - 16, 1993; [PROCEEDINGS OF THE EUROPEAN CONFERENCE ON POWER ELECTRONICS AND APPLICATIONS], LONDON, IEE, GB, Bd. 4, 13. September 1993 (1993-09-13), Seiten 102-109, XP000427058,**
- **RIVER T H LI ET AL: "Use of Hybrid PWM and Passive Resonant Snubber for a Grid-Connected CSI", IEEE TRANSACTIONS ON POWER ELECTRONICS, INSTITUTE OF ELECTRICAL AND ELECTRONICS ENGINEERS, USA, Bd. 24, Nr. 2, Februar 2010 (2010-02), Seiten 298-309, XP011289751, ISSN: 0885-8993**

**Beschreibung**

Die vorliegende Erfindung betrifft ein Verfahren zum Erzeugen eines elektrischen Wechselstroms und sie betrifft auch ein Verfahren zum Einspeisen elektrischer Leistung in ein elektrisches Versorgungsnetz. Weiterhin betrifft die vorliegende Erfindung einen Wechselrichter zum Erzeugen eines Wechselstroms und die vorliegende Erfindung betrifft eine Windenergieanlage mit einem Wechselrichter zum Erzeugen eines Wechselstroms. Die Erfindung betrifft auch eine Einspeiseanordnung mit mehreren Wechselrichtern.

Elektrischer Wechselstrom wird beispielsweise erzeugt, um ihn in ein elektrisches Versorgungsnetz einzuspeisen. Das erfolgt üblicherweise dreiphasig. Besonders moderne Windenergieanlagen verwenden hierzu Wechselrichter, die elektrische Leistung, die aus dem Wind gewonnen wurde, in einen Wechselstrom wandeln, der zum Einspeisen in ein elektrisches Versorgungsnetz geeignet ist.

Je mehr Leistung dabei in das elektrische Versorgungsnetz eingespeist werden soll, umso größer muss auch der einzuspeisende Strom gewählt und damit erzeugt werden. Es ist seit langem schon bekannt, mehrere Wechselrichter parallel zu schalten, damit diese ihre Einzelströme zu einem einzuspeisenden Gesamtstrom überlagern. Eine Solche Überlagerung kann so aussehen, dass mehrere Wechselrichter an ihrem Stromausgang parallel geschaltet werden, sodass sich dadurch die Einzelströme der einzelnen Wechselrichter aufaddieren. Da jeder Wechselrichter für sich den Wechselstrom durch ein Schaltverfahren erzeugt, beispielsweise durch eine Puls-Weiten-Modulation oder durch ein Toleranzbandverfahren, können Oberwellen auf den jeweils erzeugten Strömen auftreten. Arbeiten die Wechselrichter unabhängig voneinander, können sich diese Oberwellen günstig oder ungünstig überlagern.

Um dieses Problem zu beheben, ist bereits in der Deutschen Patentanmeldung DE 10 2014 219 052 vorgeschlagen worden, die einzelnen Modulationsverfahren der mehreren parallel geschalteten Wechselrichter aufeinander abzustimmen.

Eine Erhöhung oder Verbesserung der Stromerzeugung beziehungsweise Strommodulation jedes einzelnen Wechselrichters wird dadurch noch nicht unmittelbar erreicht. Dabei besteht auch Bedarf, generell noch höhere Ströme mit einem Wechselrichter zu erzeugen.

Grundsätzlich kann eine Leistungserhöhung in einem Wechselrichter auch dadurch erreicht werden, dass der zu modulierende Strom mit einer signifikant höheren Spannung erzeugt wird, um dadurch die höhere Leistung nicht, oder nicht nur, durch eine Stromerhöhung, sondern durch eine Spannungserhöhung zu erreichen. Alternativ oder zusätzlich kommt auch in Betracht, den jeweiligen Wechselrichter ganz grundsätzlich für das Erzeugen höherer Ströme auszulegen. In beiden Fällen wären aber entsprechend geänderte Halbleiterschaltelemente, besonders IGBTs, notwendig, die die höhere Spannung, beziehungsweise den höheren Strom aushalten können. Die Verwendung solcher verbesserter Halbleiterbauelemente ist jedoch regelmäßig kostspielig, wenn für Strom als auch Spannung übliche Werte verlassen werden. Dann müssen regelmäßig Sonderanfertigungen oder zumindest Halbleiterbauelemente geringerer Stückzahl verwendet werden. Auch das Verhalten solcher Bauelemente ist regelmäßig schlechter bekannt und daher ein Gesamtverhalten des neu zu entwerfenden Wechselrichters schlechter vorhersehbar.

Das Deutsche Patent- und Markenamt hat in der Prioritätsanmeldung zu vorliegender Anmeldung folgenden Stand der Technik recherchiert: DE 40 23 207 C1, DE 10 2014 219 052 A1 und US 2007/0273338 A1.

EP 0 600 312 A2 beschreibt ein Verfahren zum Parallelschalten von Umrichtern anhand von Strom-Extremwerten.

DE 10 2014 219 052 A1 beschreibt ein Verfahren zum Erzeugen eines elektrischen Wechselstroms.

Artikel "A Hysteresis Current Control for Parallel Connected Line-Side Converters of an Inverter Locomotive" von M. Meyer et al., CONTROL IN POWER ELECTRONICS. BRIGHTON, SEPT. 13 - 16, 1993; [PROCEEDINGS OF THE EUROPEAN CONFERENCE ON POWER ELECTRONICS AND APPLICATIONS], LONDON, IEE, GB, Bd. 4, 13. September 1993 (1993-09-13), Seiten 102-109, beschreibt eine Hysteresestromregelung für parallel geschaltete netzseitige Umrichter einer Wechselrichter-Lokomotive.

Artikel "Use of Hybrid PWM and Passive Resonant Snubber for a Grid-Connected CSI", IEEE TRANSACTIONS ON POWER ELECTRONICS, INSTITUTE OF ELECTRICAL AND ELECTRONICS ENGINEERS, USA, Bd. 24, Nr. 2, Februar 2010 (2010-02), Seiten 298-309, beschreibt die Verwendung von hybrider Pulsbreitenmodulation (PWM) und passiver Resonanzdämpfung für netzgekoppelte Stromquellenumrichter (CSI),

Der vorliegenden Erfindung liegt somit die Aufgabe zugrunde, zumindest eins der oben genannten Probleme zu adressieren. Insbesondere soll eine Lösung vorgeschlagen werden, bei der die Erzeugung eines Wechselstroms in einem Wechselrichter hinsichtlich Oberschwingungen und/oder hinsichtlich Effizienz verbessert werden kann. Zumindest soll zu bisherigen Verfahren eine alternative Lösung vorgeschlagen werden.

Erfindungsgemäß wird somit ein Verfahren zum Erzeugen eines elektrischen Wechselstroms gemäß Anspruch 1 vorgeschlagen. Demnach werden mehrere Teilströme erzeugt und zu einem Summenstrom überlagert. Jeder Teilstrom wird durch Spannungspulse moduliert und die Spannungspulse werden für jeden Teilstrom durch ein Schaltmittel erzeugt. Das Schaltmittel schaltet dafür zwischen unterschiedlichen Eingangsspannungen, wodurch die Spannungspulse erzeugt werden. Besonders kann hier zwischen einer positiven und einer negativen Spannung eines Gleichspannungszwischenkreises geschaltet werden. Jedes Teilschaltmittel kann einer von drei Zweigen einer sogenannten B6-Brücke sein. Bei beispielsweise zwei Teilschaltmitteln sind das natürlich zwei Zweige von unterschiedlichen B6-Brücken, und dort jeweils von derselben Phase.

Trotz des Verweises auf die praktischerweise verwendete B6-Brücke, sollen die nachfolgenden Erläuterungen aber zunächst die grundsätzliche Funktionsweise einphasig erklären. Diese Grundgedanken sind dann sinngemäß auf ein dreiphasiges System übertragbar. Dazu erfolgen später auch noch Erläuterungen.

Es werden also mehrere Teilströme zu einem Summenstrom überlagert, nämlich aufsummiert. Das Erzeugen der Spannungspulse ist im Grunde angelehnt an ein sogenanntes Toleranzbandverfahren. Es wird hier aber vorgeschlagen, dass ein Toleranzband für den Summenstrom vorgegeben wird und das Toleranzband hat eine obere und eine untere Toleranzgrenze. Es wird hier also nicht, wie das bisher der Fall war, für jeden Teilstrom ein Toleranzband vorgegeben und dieser Teilstrom entsprechend moduliert, sondern es wird ein Toleranzband für die Summe dieser Ströme, also ein Toleranzband für den Summenstrom, vorgegeben.

Es wird nun der Summenstrom erfasst und das Schalten jedes Teilschaltmittels zum Erzeugen der Spannungspulse zum Modulieren des Teilstroms in Abhängigkeit des erfassten Summenstroms in Bezug auf das Toleranzband gesteuert. Es wird also der Summenstrom erfasst, und zwar in Bezug auf das Toleranzband, das grafisch gesprochen um ihn herum liegt, oder zumindest liegen sollte. Besonders wird hierbei überwacht, ob der Summenstrom die obere oder untere Toleranzgrenze erreicht.

Jedenfalls wird also der Summenstrom erfasst und in Bezug zu dem Toleranzband gesetzt, aber als Konsequenz erfolgt ein Schalten der Teilschaltmittel. Bildlich gesprochen erfolgt also ein Schalten oder Modulieren der Teilströme. Dabei werden die Teilschaltmittel nicht synchron geschaltet. Es können dennoch Situationen auftreten, in denen zwei oder mehr Teilschaltmittel zugleich geschaltet werden, das Gesamtverfahren sieht aber nicht vor, die Teilschaltmittel synchron zu schalten. Dabei wird unter Synchronschalten nicht nur ein zeitgleiches Schalten, sondern auch ein Schalten in dieselbe Richtung verstanden. Schaltet also beispielsweise ein Teilschaltmittel von einer hohen auf eine niedrige Spannung, besonders von einer positiven auf eine negative Spannung, und schaltet zeitgleich ein anderes Teilschaltmittel von der negativen auf die positive Spannung, so ist darunter kein synchrones Schalten zu verstehen. Ein synchrones Schalten wäre, wenn die beiden exemplarisch genannten Teilschaltmittel zugleich von der exemplarisch genannten positiven Spannung auf die negative Spannung schalten, was bei den vorgeschlagenen Verfahren vermieden werden soll, zumindest nicht überwiegend erfolgen soll.

Somit wird ein Verfahren vorgeschlagen, das sich an einem bekannten Toleranzbandverfahren orientiert, das aber ein Toleranzband für einen Summenstrom vorsieht, das wiederum ein Schalten von Teilschaltmitteln für Teilströme des Summenstrom auslöst.

Vorzugsweise wird wenigstens ein Teilschaltmittel geschaltet, wenn der erfasste Summenstrom die obere oder die untere Toleranzgrenze erreicht. Vorzugsweise wird zum Schalten wenigstens eines der Teilschaltmittel ausgewählt, und die Auswahl erfolgt in Abhängigkeit einer die Teilströme bewertenden Auswahlfunktion. Das erfolgt insbesondere so, dass dann, wenn der erfasste Summenstrom die obere oder untere Toleranzgrenze erreicht, ein Teilschaltmittel schaltet und die Auswahl, welches Teilschaltmittel schaltet, erfolgt so, dass von denjenigen Teilschaltmitteln, die zum Schalten in Betracht kommen, dasjenige Teilschaltmittel ausgewählt wird, dessen Teilstrom in dem Moment dem Betrage nach am größten ist. Dabei kommen jeweils nur die Teilschaltmittel in Betracht, deren Schalten in dem Moment auch eine Änderung des Summenstromes in die richtige Richtung erwarten lassen. Wenn bspw. der Summenstrom zu reduzieren ist, kommen nur die Schaltmittel in Betracht, deren Schalten auch ihren Teilstrom reduziert. In diesem Beispiel kommen also nur die Schaltmittel in Betracht, die in dem Moment zur hohen bzw. positiven Spannung geschaltet sind und somit in diesem Moment nach unten zu einer niedrigeren bzw. negativen Spannung geschaltet werden können, um dadurch eine Stromverringerung auszulösen.

Setzt sich der Summenstrom also aus zwei Teilströmen zusammen, um ein einfaches Beispiel zu nennen, und erreicht der Summenstrom die obere Toleranzgrenze, und sind beide Schaltmittel nach oben zur hohen bzw. positiven Spannung geschaltet, wird überprüft, ob der erste oder der zweite Teilstrom größer sind. Ist der erste Teilstrom größer, der nämlich von dem ersten Teilschaltmittel erzeugt, also moduliert wird, so wird dieses Teilschaltmittel geschaltet, nämlich in dem Beispiel von einer Schalterstellung hoher oder positiver Spannung auf eine Schalterstellung niedriger, beziehungsweise negativer Spannung. Wäre der zweite Teilstrom größer, würde demnach das zweite Teilschaltmittel schalten. Grundsätzlich erfolgt hier sinnvoller Weise ein Schalten von einer positiven auf eine negative Spannung. Theoretisch kann aber auch eine potenzialfreie Betrachtung erfolgen, sodass die positive und negative Spannung dann als hohe beziehungsweise niedrige Spannung bezeichnet werden könnte. Nachfolgend wird aber grundsätzlich von einem Schalten zwischen positiver und negativer Spannung zur Erläuterung ausgegangen, was auch als Schalten von einer oberen zu einer unteren Stellung bezeichnet werden kann.

Jedenfalls wird hiermit nun erreicht, dass der Summenstrom insgesamt betrachtet wird, was ganz grundsätzlich den Vorteil hat, dass auch der Summenstrom geregelt wird und daher unmittelbar mit der Regelung dafür gesorgt werden kann, dass der Summenstrom auch im Toleranzband bleibt. Trotz der Betrachtung des Summenstroms werden aber Teilschaltmittel und damit im Ergebnis Teilströme geschaltet, wenn dies zum Erreichen der gewünschten Stromänderung des Summenstroms ausreichend ist. Dadurch, dass dann, wenn der Summenstrom eine Toleranzgrenze erreicht, zunächst ein Schalter geschaltet wird, wird ein synchrones Schalten vermieden. Dadurch können auch Oberwellen, bzw. Oberschwingungen, was hier als Synonym verwendet wird, verringert werden. Ist es nicht ausreichend, wenn nur ein Teilstrom geschaltet wird, werden beide Teilströme geschaltet. Die Entscheidung darüber, wird an Hand eines Kriteriums getroffen, in das auch die gemessene Netzspannung eingeht.

Insoweit erfolgt ein Erzeugen des Summenstroms über ein Toleranzband für den Summenstrom und außerdem über ein weiteres Kriterium, das nämlich die genannte Auswahlfunktion zugrunde legt, die die Teilströme bewertet.

Erfindungsgemäß wird vorgeschlagen, dass wenigstens ein Differenzstrom als Differenz zwischen zwei Teilströmen erfasst wird, und das Schalten in den Teilschaltmitteln zusätzlich in Abhängigkeit des Differenzstroms erfolgt. In dem anschaulichen und im Übrigen bevorzugten Beispiel von zwei Teilströmen, wäre dies die Differenz der beiden Teilströme. Dadurch kann zusätzlich bewertet und berücksichtigt werden, wie groß die beiden Teilströme zueinander sind. Möglichst wird dafür gesorgt, dass diese im Mittel gleichgroß sind, dass die Differenz also im Mittel null ist.

Erfindungsgemäß erfolgt diese Berücksichtigung so, dass für den Differenzstrom ein Differenzband vorgegeben wird, das eine obere und eine untere Differenzgrenze aufweist. Wenn nun der Differenzstrom die obere oder untere Differenzgrenze dieses Differenzbandes erreicht, wird für diese Ausführungsform vorgeschlagen, dass wenigstens zwei der Teilschaltmittel zueinander entgegengesetzt geschaltet werden, ihre Stellung also tauschen, wenn diese Schaltposition mit dem Erreichen des Regelungsziels für den Summenstrom vereinbar ist.

Um das obige Beispiel wieder aufzugreifen, in dem der Summenstrom aus zwei Teilströmen zusammengesetzt ist, erfolgt grundsätzlich mit höherer Priorität das Schalten eines der Teilschaltmittel, wenn der Gesamtstrom eine der beiden Toleranzgrenzen erreicht hat. Erreicht also beispielsweise der Gesamtstrom die obere Toleranzgrenze, während beide Teilschaltmittel auf die positive Spannung geschaltet haben, schaltet das Teilschaltmittel des dann dem Betrage nach größeren Teilstroms von der positiven auf die negative Spannung, also von der oberen Stellung auf die untere. Im Ergebnis führt das dazu, dass dieser beispielhaft genannte erste Teilstrom wieder abnimmt und damit auch der Summenstrom abnimmt. Damit wird der Summenstrom im Toleranzband gehalten. Dadurch, dass dieser erste Teilstrom nun wieder sinkt, wohingegen der andere Teilstrom nicht oder zumindest nicht in dem Maße sinkt, verändert sich auch der Differenzstrom entsprechend. Erreicht dabei der Differenzstrom eine der beiden Differenzgrenzen, so werden beide Teilschaltungen entgegengesetzt geschaltet. Anschaulich gesprochen tauschen diese beiden Teilschaltungen ihre Schalterstellung. Die beispielhafte Schalterstellung, bei der die erste Teilschaltung in der unteren Stellung und die zweite Teilschaltung in der oberen Stellung ist, wird gewechselt in die Situation, dass die erste Teilschaltung in der oberen und die zweite Teilschaltung in der unteren Stellung ist. Das Ergebnis ist, dass der erste Teilstrom dann wieder ansteigen und der zweite Teilstrom dann abfallen wird. Für den Summenstrom dürfte das allerdings keinen nennenswerten Unterschied machen.

Hiermit kann also der Summenstrom so gesteuert werden, dass er in dem Toleranzband bleibt. Gleichzeitig können die Teilströme, hier zwei Teilströme gemäß dem Beispiel, so gesteuert werden, dass sie im Mittel gleichgroß sind. Es wird also trotz individuellen Schaltens der einzelnen Teilströme beziehungsweise der Schaltmittel der einzelnen Teilströme vermieden, dass beispielsweise aufgrund geringer Unsymmetrien der beiden Teilschaltmittel eines der Teilschaltmittel den Summenstrom bzw. seine Modulierung dominiert. Gleichzeitig wird ein permanentes Synchronschalten mehrerer Teilschaltmittel vermieden, um Oberschwingungen gering zu halten.

Gemäß einer weiteren Ausführungsform wird vorgeschlagen, dass überwacht wird, ob der Summenstrom nach Erreichen der oberen oder unteren Toleranzgrenze und nach einem dadurch ausgelösten Schalten eines der Teilschaltmittel das Toleranzband nicht verlassen hat. Sollte dieser Fall, dass der Summenstrom das Toleranzband doch verlassen hat, auftreten, wird wenigstens ein weiteres Teilschaltmittel geschaltet.

Um das obere Beispiel aufzugreifen, würde dann, wenn der Summenstrom die obere Toleranzgrenze erreicht, das beispielhaft genannte erste Teilschaltmittel von der oberen Stellung in die untere Stellung schalten, also herunterschalten. Führt das, entgegen der oben gemachten Erläuterung, dazu, dass der Summenstrom das Toleranzband doch verlässt, wird auch das zweite Teilschaltmittel nach unten schalten.

Vorzugsweise kann diese Überwachung auch so durchgeführt werden, dass ein das Toleranzband umgebendes Kontrollband vorgesehen wird. Das Kontrollband ist also größer als das Toleranzband und weist eine erweiterte Obergrenze und eine erweiterte Untergrenze auf. Die erweiterte Obergrenze liegt oberhalb der oberen Toleranzgrenze und die erweiterte Untergrenze unterhalb der unteren Toleranzgrenze. Erreicht nun der Summenstrom die erweiterte Obergrenze, wird das wenigstens eine weitere Teilschaltmittel geschaltet. Sinngemäß gilt das Gleiche bei einem Verlassen des Toleranzbandes nach unten, dass nämlich bei Erreichen der erweiterten Untergrenze das weitere Teilschaltmittel schaltet, nämlich so, dass danach wenigstens zwei Teilschaltmittel nach oben geschaltet sind.

Vorzugsweise ist ein Abstand des Differenzbandes zwischen oberer und unterer Differenzgrenze größer als ein Abstand des Toleranzbandes zwischen oberer und unterer Toleranzgrenze für den Summenstrom. Das Differenzband ist also breiter als das Toleranzband für den Summenstrom. Dadurch wird besonders erreicht, dass das Schalten in Abhängigkeit des Summenstromes im Toleranzband häufiger ausgelöst wird, als das Schalten aufgrund der Position des Differenzstroms im Differenzband.

Vorzugsweise wird ein Verhältnis des Abstands des Toleranzbandes zum Abstand des Differenzbandes als Bandverhältnis vorgegeben und ist einstellbar. Insbesondere kann dieses auf einen Wert größer als 1,5, insbesondere größer als 2 eingestellt werden, bzw. als solcher Wert vorgegeben werden. Vorzugsweise ist das Bandverhältnis vom Betrieb, von Messwerten, oder Systemzuständen abhängig.

Gemäß einer Ausführungsform wird vorgeschlagen, dass das Toleranzband und/oder das Differenzband veränderlich sind, insbesondere, dass die obere und untere Toleranzgrenze einzeln oder zusammen veränderlich sind und/oder, dass der Abstand des Toleranzbandes zwischen oberer und unterer Toleranzgrenze und/oder der Abstand des Differenzbandes zwischen oberer und unterer Differenzgrenze veränderlich sind. Durch die Veränderung des Toleranzbandes kann Einfluss genommen werden auf das Erzeugen des Summenstroms. Wird das Toleranzband beispielsweise insgesamt verschoben, also beispielsweise nach oben, so kann dadurch der erzeugte Summenstrom insgesamt auch nach oben verschoben werden.

Das Toleranzband kann auch in einer positiven Halbwelle einer zu erzeugenden Sinusfunktion nach oben und in der negativen Halbwelle nach unten verschoben werden, um dadurch Einfluss zu nehmen. Besonders kann dieses oder ein anderes Verändern des Toleranzbandes auf weitere ebenso arbeitende Wechselrichter abgestimmt werden, um dadurch einen Gesamtstrom, der sich aus mehreren Summenströmen dieser Wechselrichter zusammensetzt, zu beeinflussen. Durch eine Veränderung des Abstandes des Toleranzbandes und damit durch eine Verbreiterung oder Verschmälerung des Toleranzbandes, gleiches gilt für das Differenzband, kann die Schaltfrequenz verändert werden. Je schmaler das Toleranzband, umso höher ist die sich einstellende Schaltfrequenz.

Es können auch die obere oder untere Toleranzgrenze individuell, also voneinander unabhängig, verändert werden, um dadurch den Summenstrom zu beeinflussen.

Gemäß einer Ausführungsform wird vorgeschlagen, dass jedes Teilschaltmittel einen Stromausgang zum Ausgeben des Teilstroms ausweist, und an dem Stromausgang eine elektrische Drossel zum Führen des Teilstroms angeordnet ist und die Drosseln magnetisch gekoppelt sind. Die Drosseln werden besonders dafür verwendet, dass die Spannungspulse zu einem Strom führen. Jedes Teilschaltmittel kann also Spannungspulse bereitstellen, bzw. zu solchen beitragen und diese führen durch die nachgeschaltete Drossel zu dem entsprechenden Teilstrom, der vereinfacht ausgedrückt an einen sinusförmigen Verlauf mit überlagertem Sägezahn erinnert. Diese Drosseln bilden bei Wechselrichtern vergleichsweise große und damit teuer Bauteile. Durch die magnetische Kopplung mehrerer solcher Drosseln, die auch als Ausgangsdrosseln bezeichnet werden können, lässt sich die Gesamtgröße jeder einzelnen Drossel zumindest etwas verringern. Besonders bei der Verwendung von zwei Teilschaltmitteln wird vorgeschlagen, zwei magnetisch gekoppelte Drosseln zu verwenden. Zwei Teilschaltmittel verwenden somit an ihren Ausgängen eine magnetisch gekoppelte Doppeldrossel.

Eine weitere Ausführungsform ist dadurch gekennzeichnet, dass mehrere Teilschaltmittel zu einer Wechselrichtervorrichtung zusammengefasst sind und die Wechselrichtervorrichtung den Summenstrom als Ausgangsstrom ausgibt. Im Grunde bilden also mehrere Teilschaltmittel einen Wechselrichter. An dieser Stelle sei nochmals erwähnt, dass das Prinzip zunächst einphasig erläutert wurde. Bei dem Verwenden eines Wechselrichters für mehrere, besonders zwei Teilschaltmittel, sind diese dreifach vorzusehen, nämlich für jede Phase einmal. Im Falle von zwei Teilschaltmitteln für einen Summenstrom im einphasigen Fall wären somit 6 Teilschaltmittel im dreiphasigen Fall vorzusehen. Diese 6 Teilschaltmittel können in diesem dreiphasigen Fall als zwei B6-Brücken ausgeführt sein.

Es ist nun vorgesehen, mehrere solcher Wechselrichtervorrichtungen parallel zu schalten und ihre Ausgangsströme, also die einzelnen Summenströme, zu einem Gesamtstrom zu überlagern. Insbesondere ist vorgesehen, den Gesamtstrom in ein elektrisches Versorgungsnetz einzuspeisen. Es kann somit ein insgesamt sehr großer Strom durch diese Parallelschaltung erzeugt werden, nämlich der genannte Gesamtstrom. Dabei können die einzelnen Summenströme, die zu diesem Gesamtstrom überlagert werden, in der erläuterten vorteilhaften Weise erzeugt werden. Insbesondere können sie durch diese modifizierte Toleranzbandverfahren gut gesteuert werden, was auch zu einem entsprechend verbesserten Gesamtstrom führt. Weiterhin ermöglicht auch das vorgeschlagene Verfahre, die einzelnen Wechselrichtervorrichtungen, die hier parallel geschaltet sind, aufeinander abzustimmen.

Gemäß einer Ausführungsform wird vorgeschlagen, dass jeweils zwei Teilschaltmittel zu einer Wechselrichtervorrichtung zusammengefasst sind, sodass sich genau zwei Teilströme zu einem Summenstrom überlagern, wobei insbesondere jede Wechselrichtervorrichtung zwei magnetisch gekoppelte Drosseln als Ausgangsdrosseln aufweist. Es wurde erkannt, dass auf einfache und effiziente Weise zwei Teilschaltmittel zusammengefasst werden können, um durch das Erzeugen von zwei Teilströmen im Ergebnis in dem Summenstrom eine Stromverdopplung erreichen können. Der regelungstechnische Aufwand für zwei solcher Teilschaltungen ist dabei vergleichsweise gering, wobei gleichzeitig eine Qualitätsverbesserung erreicht werden kann, insbesondere hinsichtlich Oberwellen, die auch als Oberschwingungen bezeichnet werden können. Dabei kann eine solche Stromverdoppelung durch Verbindung im Grunde bekannter und bewährter elektronischer Bauelemente erreicht werden. Gleichzeitig ist dieses mit einer doppelten Drossel, die aus zwei magnetisch gekoppelten Drosseln besteht, gut kombinierbar.

Es wird gemäß einer noch weiter bevorzugten Ausgestaltung vorgeschlagen, dass das Verfahren dadurch gekennzeichnet ist, dass zwei Teilschaltungen so zusammenwirken, dass sie zwei Teilströme erzeugen, die zu einem Summenstrom überlagert werden und jede der beiden Teilschaltungen zwischen einer oberen und einer unteren Schalterstellung schalten kann. Dabei erhöht sich der Summenstrom, wenn beide Teilschalteinheiten in der oberen Schalterstellung sind und damit zusammen eine positive Stellung einnehmen. Dies wird somit nachfolgend als positive Stellung bezeichnet. Der Summenstrom verringert sich, wenn beide Teilschalteinheiten in der unteren Schalterstellung sind und damit eine negative Stellung einnehmen. Dass beide Schalteinheiten in der unteren Schalterstellung sind, wird somit nachfolgend als negative Stellung bezeichnet. Der Summenstrom verändert sich nicht oder wenig, wenn die beiden Teilschalteinheiten in unterschiedlichen Schalterstellungen sind und damit zusammen eine neutrale Stellung einnehmen. Es kann also eine Teilschalteinheit in einer oberen und die andere in einer unteren Schalterstellung sein, oder umgekehrt. Beides wird hier als neutrale Stellung bezeichnet.

Durch das Verwenden von genau zwei Teilschaltungen können in der beschriebenen Art und Weise somit auf einfache Art und Weise diese drei Stellungen geschaffen werden, nämlich die positive, die negative und die neutrale Stellung dazwischen.

Vorzugsweise kann darauf aufbauend zum Modulieren des Summenstroms ausgewählt werden zwischen einem oberen Dreipunktbetrieb, einem unteren Dreipunktbetrieb und einem Zweipunktbetrieb. Dabei wird für den oberen Dreipunktbetrieb zwischen der positiven und der neutralen Stellung geschaltet. Das entspricht im Grunde dem oben genannten Beispiel, bei dem der Summenstrom die obere Toleranzgrenze erreicht hat und dann einer der beiden Teilschaltmittel nach unten geschaltet hat. Dort wurde nämlich dadurch von der positiven in die neutrale Stellung geschaltet.

In dem unteren Dreipunktbetrieb wird zwischen der negativen und der neutralen Stellung geschaltet. Das entspricht sinngemäß also dem oberen Dreipunktbetrieb, wobei aber von der neutralen Stellung nach unten geschaltet wird und zurück, was den unteren Dreipunktbetrieb kennzeichnet. In dem Zweipunktbetrieb wird zwischen der positiven und negativen Stellung geschaltet. Das bedeutet, dass beide Schalteinheiten von einer oberen Stellung in eine untere Stellung geschaltet werden. Wenn dieser Zweipunktbetrieb gewählt wird, liegt somit doch ein synchrones Schalten vor. Deshalb ist dieser Zweipunktbetrieb im Vergleich zu den beiden Dreipunktbetrieben möglichst kurz zu halten.

Somit wurde nun durch dieses spezielle Schalten der beiden Teilschaltmittel eine Betriebsweise im Dreipunktbetrieb insgesamt geschaffen, bei dem nämlich je nach Bedarf zwischen oberem und unterem Dreipunktbetrieb gewechselt werden kann. Dies entspricht im Grunde einem herkömmlichen Dreipunktbetrieb, bei dem drei Schalterstellungen möglich sind, nämlich, um es anschaulich auszudrücken, eine obere, mittlere und untere. Bei einem eingangsseitigen Gleichspannungszwischenkreis mit Mittelpunkt kann dabei zwischen positiver Spannung, negativer Spannung und dem Mittelpunkt geschaltet werden. Zwischen dem Mittelpunkt kann in dem hier vorgeschlagenen Verfahren nicht geschaltet werden, aber die neutrale Stellung wird hier dadurch erreicht, dass ein Schaltmittel nach oben und eines nach unten geschaltet ist.

Mit anderen Worten wird somit ein Dreipunktbetrieb durch entsprechend zwei Teilschaltmittel erreicht, die jeweils für sich im Zweipunktbetrieb arbeiten. Jedes Teilschaltmittel für sich soll oder kann gemäß diesem Vorschlag nämlich keine neutrale Stellung einnehmen. Zusammen können die beiden Teilschaltmittel aber einen Dreipunktbetrieb herstellen. Dieser Dreipunktbetrieb könnte auch durch ein einziges Teilschaltmittel erreicht werden, dass eine neutrale Stellung einnehmen kann. Allerdings müsste dieses Teilschaltmittel, also insbesondere die dabei involvierten Halbleiterbauelemente, insbesondere Halbleiterschalter, größer ausgelegt sein und es ergäbe sich auch eine geringere Schaltfrequenz, oder dieses Teilschaltmittel müsste selbst mit einer höheren Frequenz schalten.

Vorzugsweise wird in einem Übergang von einer Modulation im oberen Dreipunktbetrieb zu einer Modulation im unteren Dreipunktbetrieb eine Modulation im Zweipunktbetrieb durchgeführt. Dabei wird vorzugsweise dieser Übergangsbereich so klein wie möglich gehalten, damit nicht-synchrone Schalthandlungen überwiegen. In diesem Übergangsbereich den Zweipunktbetrieb zu wählen ist vorteilhaft, um sicherzustellen, dass die Regelungsaufgabe bzgl. des Summenstroms immer gewährleistet werden kann.

Vorzugsweise wird zwischen der Modulation im oberen Dreipunktbetrieb und der Modulation im unteren Dreipunktbetrieb und gegebenenfalls der Modulation im Zweipunktbetrieb in Abhängigkeit einer Netzspannung eines elektrischen Netzes, in das eingespeist werden soll, und/oder in Abhängigkeit einer Phasenlage des Summenstroms in Bezug auf die Netzspannung ausgewählt. Im Grunde werden durch die Schaltstellungen der Teilschaltmittel Spannungen bereitgestellt, nämlich tatsächlich an der jeweiligen Ausgangsdrossel, zum Beispiel an einem eingangsseitigen Anschlusspunkt der Drossel. Wird mit dieser Teilschaltung in das elektrische Versorgungsnetz eingespeist, liegt an dem anderen Anschlusspunkt, also beispielsweise einem ausgangsseitigen Anschlusspunkt der Drossel, die Netzspannung bzw. die transformierte Netzspannung des elektrischen Versorgungnetzes an. Die Spannung, die somit von dem ersten zum zweiten Anschlusspunkt über der Drossel anliegt, hängt somit auch von der Netzspannung ab. Es ist zu beachten, dass dies eine vereinfachte Erklärung ist und besonders die Spannung an den zweiten ausgangsseitigen Anschlusspunkt von weiteren Faktoren als nur der Netzspannung abhängen kann. Somit hängt von der Netzspannung ab, welche der genannten drei Modulationen in dem jeweiligen Augenblick zweckmäßig ist. Ebenfalls spielt eine Rolle wie die gewünschte Phasenlage des Summenstroms ist, also ob, wie weit und in welche Richtung der ideale Sinusverlauf des Summenstroms zu dem hoffentlich möglichst sinusförmigen Verlauf der Spannung verschoben werden soll.

Gemäß einer weiteren Ausgestaltung wird vorgeschlagen, dass jedes Teilschaltmittel einen dreiphasigen Teilstrom erzeugt und insbesondere jede Wechselrichterschaltung einen dreiphasigen Summenstrom ausgibt. Die oben sämtlich gemachten Erläuterungen zu dem Wirkprinzip unter Bezugnahme auf einen einphasigen Strom werden somit sinnvollerweise auf die einzelnen Phasen eines dreiphasigen Stroms angewendet. Vorzugsweise sind mehrere Teilschaltmittel in einer Wechselrichtervorrichtung, die vereinfacht noch als Wechselrichter oder Wechselrichterschrank bezeichnet werden kann, zusammengefasst und geben dann einen dreiphasigen Summenstrom aus. Entsprechend kann auf einfache Art und Weise und unter Anwendung der oben genannten Vorteile ein Wechselrichter bereitgestellt werden, der einen dreiphasigen Summenstrom ausgibt. Dieser ist besonders gut zum Einspeisen in ein elektrisches Versorgungsnetz geeignet, insbesondere zum Überlagern mit weiteren Summenströmen.

Vorzugsweise wird vorgeschlagen, dass jeder dreiphasige Strom, also insbesondere sowohl jeder dreiphasige Teilstrom als auch jeder dreiphasige Summenstrom in ein transformiertes System transformiert wird und, dass eine Berechnung der Differenzströme in dem transformierten System erfolgt. Es wird also vorgeschlagen, dass für die Berechnung eines Differenzstromes Differenzen von transformierten Größen gebildet und berücksichtigt werden. Grundsätzlich können unterschiedliche bekannte Transformierungen eines dreiphasigen Systems verwendet werden. Vorzugsweise wird ein $\alpha/\beta/0$-System als transformiertes System verwendet.

Dadurch kann eine vereinfachte Berechnung für die Berücksichtigung eines dreiphasigen Systems vorgenommen werden.

Vorzugsweise wird somit auch vorgeschlagen, dass der Summenstrom oder ein, bzw. der aus mehreren Summenströmen zusammengesetzte Gesamtstrom in ein elektrisches Versorgungsnetz eingespeist wird, sodass das Verfahren zum Erzeugen eines elektrischen Wechselstroms als Verfahren zum Einspeisen elektrischer Leistung in ein elektrisches Versorgungsnetz ausgebildet ist. Um elektrische Leistung in das elektrische Versorgungsnetz einzuspeisen, besonders wenn diese elektrische Leistung durch eine Windenergieanlage erzeugt wird, kann ein Verfahren gemäß wenigstens einer der vorstehend beschriebenen Ausführungsformen verwendet werden, das dafür besonders gut geeignet ist.

Erfindungsgemäß wird zudem ein Wechselrichter zum Erzeugen eines elektrischen Wechselstroms vorgeschlagen. Dieser umfasst wenigstens einen Gleichspannungszwischenkreis mit einer ersten und einer zweiten Gleichspannung. Dieser Gleichspannungszwischenkreis kann beispielsweise seine Leistung bzw. seine Energie mithilfe eines Gleichrichters und einem Generator einer Windenergieanlage erhalten.

Der Wechselrichter umfasst auch mehrere Teilschaltmittel, die jeweils dazu vorbereitet sind, einen Teilstrom zu erzeugen. Jedes Teilschaltmittel erzeugt also einen Teilstrom. Dazu ist jedes Teilschaltmittel dazu vorbereitet, durch Spannungspulse den Teilstrom zu modulieren, indem das Teilschaltmittel dazu vorbereitet ist, durch Schalten zwischen der ersten und zweiten Spannung die Spannungspulse zu erzeugen. Diese erste und zweite Gleichspannung entsprechen somit der oben beschriebenen oberen und unteren Spannung bzw. der oben beschriebenen positiven und negativen Spannung. Diese Begriffe können zum Zwecke der Erläuterung der Erfindung synonym verwendet werden. Jedes Teilschaltmittel kann also aus der Gleichspannung ein Pulsmuster erzeugen, um dadurch einen Wechselstrom zu erzeugen. Es kann bspw. ein Gleichspannungskreis vorgesehen, auf den alle Teilschaltmittel zugreifen, oder es kommt auch in Betracht, dass für jedes Teilschaltmittel ein eigener Gleichspannungszwischenkreis vorgesehen ist.

Außerdem ist ein Überlagerungsmittel zum Überlagern der Teilströme zu einem Summenstrom vorgesehen. Dieses Überlagerungsmittel kann beispielsweise durch einen Verknüpfungspunkt realisiert sein, an dem die einzelnen Teilströme addiert werden. Besonders kann ein solcher Verknüpfungspunkt ausgangsseitig von Ausgangsdrosseln der Teilschaltmittel vorgesehen sein.

Außerdem ist ein Prozessrechenmittel vorhanden, besonders ein Prozessrechner, um ein Toleranzband für den Summenstrom mit einer oberen und einer unteren Toleranzgrenze vorzugeben. Damit kann ein an ein Toleranzbandverfahren angelehntes Verfahren vorbereitet werden.

Außerdem umfasst der Wechselrichter ein Steuermittel, vorbereitet zum Steuern jedes Teilschaltmittels in Abhängigkeit des erfassten Summenstroms und in Abhängigkeit der Toleranzgrenze. Je nachdem, wie der Summenstrom in dem Toleranzband liegt, insbesondere, ob er die obere oder untere Toleranzgrenze berührt, wird somit das Steuern der Teilschaltmittel vorgenommen.

Dabei wird vorgeschlagen, dass das Steuermittel funktional mit dem Prozessrechenmittel verbunden ist, um geführt durch das Prozessrechenmittel die Teilschaltmittel zu steuern. Besonders können von dem Prozessrechenmittel Schaltzustände besonders in Abhängigkeit des erfassten Summenstroms und in Abhängigkeit der Toleranzgrenze berechnet werden, die das Steuermittel dann umsetzt. Das Steuermittel steuert insbesondere jedes Teilschaltmittel im Einzelnen an, um die von dem Prozessrechenmittel berechneten Schaltzustände umzusetzen. Besonders kann das Steuermittel dazu einzelne Halbleiterschalter der Teilschaltmittel ansteuern, insbesondere IGBTs.

Außerdem sind das Prozessrechenmittel und das Steuermittel so vorbereitet, dass das Schalten der mehreren Teilschaltmittel zumindest teilweise, insbesondere überwiegend, zueinander nicht-synchron erfolgt. Besonders berechnet das Prozessrechenmittel hierzu die entsprechenden Schalterstellungen so, dass das überwiegend nicht-synchrone Schalten der Schaltmittel eingehalten wird. Das Steuermittel setzt dies dann durch Ansteuern der einzelnen Teilschaltmittel um, besonders durch Ansteuern der einzelnen Halbleiterschalter.

Der Wechselrichter weist auch ein Ausgabemittel zum Ausgeben des Summenstroms als dem zu erzeugenden Wechselstrom auf. Der Summenstrom ist somit der Wechselstrom, den der Wechselrichter erzeugen soll. Das Ausgabemittel kann besonders als Anschlussklemme vorgesehen sein und mit dem Überlagerungsmittel elektrisch verbunden sein.

Der Wechselrichter ist dazu vorbereitet, insbesondere ist sein Prozessrechenmittel dazu vorbereitet, ein Verfahren gemäß einem der vorstehenden Ausführungsformen auszuführen. Außerdem, ist er dazu vorbereitet, mit weiteren gleichartigen Wechselrichtern gekoppelt zu werden, insbesondere so, dass der ausgegebene Summenstrom mit weiteren Summenströmen zu einem Gesamtstrom überlagert wird. Auch insoweit ist der Wechselrichter dazu vorbereitet, die vorstehend beschriebenen Ausführungsformen auszuführen, bei denen mehrere Summenströme zu einem Gesamtstrom überlagert werden.

Vorzugsweise ist der Wechselrichter dadurch gekennzeichnet, dass zwischen jedem Teilschaltmittel und dem Überlagerungsmittel eine Drossel verschaltet ist und diese Drosseln magnetisch gekoppelt sind. Es sind somit so viele Drosseln vorhanden wie Teilschaltmittel und diese Drosseln sind magnetisch gekoppelt. Sie sind damit so angeordnet, dass jeweils der Teilstrom des Teilschaltmittels über die Drossel zum Überlagerungsmittel gelangt und im Übrigen von dort weiter zum Ausgabemittel. Eine magnetische Kopplung kann beispielsweise so erfolgen, dass die Drosseln auf einem gemeinsamen magnetischen Kern angeordnet sind.

Gemäß einer Ausführungsform wird vorgeschlagen, dass der Wechselrichter genau zwei Teilschaltmittel aufweist und somit genau zwei Teilströme erzeugt, die zu einem Summenstrom überlagert werden. Im bevorzugten dreiphasigen Fall weist er somit zwei dreiphasige Teilschaltmittel auf. Die zwei dreiphasigen Teilschaltmittel können auch als 6 einphasige Teilschaltmittel bezeichnet werden, von denen jeweils zwei paarweise zwei einphasige Teilströme erzeugen, die einen einphasigen Summenstrom bilden und so insgesamt drei einphasige Summenströme erzeugt werden, die zusammen einen dreiphasigen Summenstrom bilden. Damit ist ein solcher Wechselrichter besonders gut dazu vorbereitet, die vorstehend gemäß Ausführungsformen beschriebenen Verfahren umzusetzen, die ebenfalls genau zwei Teilströme erzeugen und überlagern.

Erfindungsgemäß wird zudem eine Einspeiseanordnung mit mehreren Wechselrichtern vorgeschlagen. Dazu werden Wechselrichter gemäß wenigstens einer der vorstehend beschriebenen Ausführungsformen kombiniert. Dabei werden die Wechselrichter an ihren Ausgangsmitteln, an denen sie also den Summenstrom jeweils ausgeben, so parallel geschaltet, dass sich die Summenströme zu einem Gesamtstrom überlagern. Entsprechend kann damit auch ein Verfahren umgesetzt werden, das oben gemäß wenigstens einer Ausführungsform zum Überlagern mehrerer Summenströme zu einem Gesamtstrom beschrieben wurde.

Vorzugsweise ist die Einspeiseanordnung dadurch gekennzeichnet, dass die Wechselrichter, insbesondere ihre Prozessrechenmittel, untereinander gekoppelt sind, um Informationen auszutauschen, um das Erzeugen der Summenströme zwischen den Wechselrichtern zu koordinieren. Die Summenströme, die durch die beschriebenen Verfahren bzw. die beschriebenen Wechselrichter erzeugt werden, sind bereits gut dazu geeignet, überlagert zu werden. Durch eine solche Kommunikation der Wechselrichter untereinander kann das Überlagern der Summenströme noch zusätzlich verbessert werden.

Erfindungsgemäß wird auch eine Windenergieanlage vorgeschlagen. Eine solche Windenergieanlage weist einen aerodynamischen Rotor und einen Generator auf, um elektrische Leistung aus Wind zu erzeugen. Zum Einspeisen der Leistung als elektrischen Strom in ein elektrisches Versorgungsnetz weist die Windenergieanlage wenigstens einen Wechselrichter gemäß einer vorstehend beschriebenen Ausführungsform auf. Außerdem oder alternativ weist die Windenergieanlage dazu eine Einspeiseanordnung gemäß einer vorstehend beschriebenen Ausführungsform auf. Somit kann mit dem aerodynamischen Rotor und dem Generator Leistung aus dem Wind erzeugt werden und insbesondere mittels eines Gleichrichters als Gleichspannung zur Verfügung gestellt werden. Aus der Gleichspannung kann dann durch einen oder mehrere Wechselrichter, die in einer Einspeiseanordnung kombiniert sein können, ein elektrischer Wechselstrom zum Einspeisen in das elektrische Versorgungsnetz erzeugt werden. Damit können die vorstehend beschriebenen Vorteile zu dem Wechselrichter und der Einspeiseanordnung und damit die beschriebenen Vorteile zu dem Verfahren zum Erzeugen eines elektrischen Wechselstroms für die Windenergieanlage ausgenutzt werden.

Nachfolgend wird die Erfindung anhand von Ausführungsformen beispielhaft unter Bezugnahme auf die begleitenden Figuren näher beschrieben.

Fig. 1     zeigt eine Windenergieanlage in einer perspektivischen Darstellung.

Fig. 2     zeigt in einer 1-strängigen bzw. einphasigen Darstellung ein Modell eines Wechselrichters mit zwei Teilschaltmitteln schematisch.

Fig. 3.     zeigt zwei gekoppelte Induktivitäten mit gemeinsamer, nicht gekoppelter Induktivität.

Fig. 4     zeigt eine weitere schematische Darstellung eines erfindungsgemäßen Wechselrichters.

Fig. 5     veranschaulicht ein Pulsmuster zur Veranschaulichung eines erfindungsgemäßen Verfahrens.

Fig. 6     zeigt ein Ablaufdiagramm zum Veranschaulichen eines erfindungsgemäßen Verfahrens.

Fig. 7     zeigt ein Toleranzband und ein Differenzband zum Veranschaulichen eines erfindungsgemäßen Verfahrens.

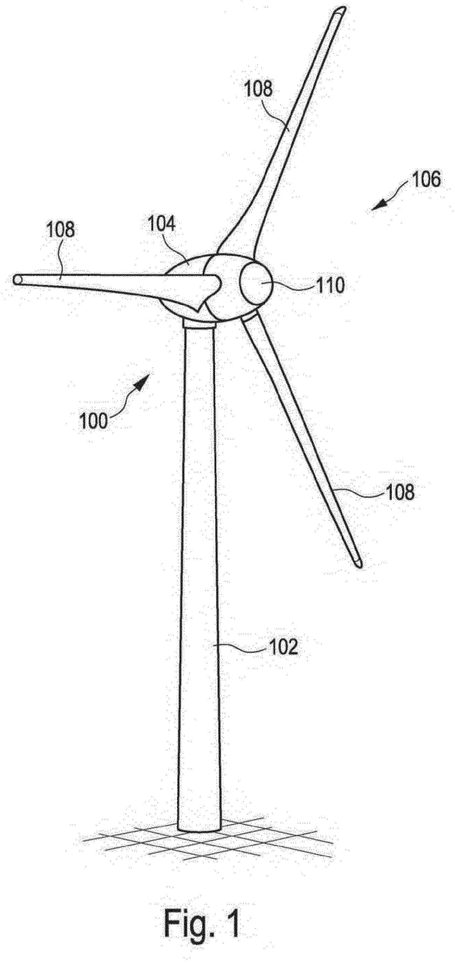

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

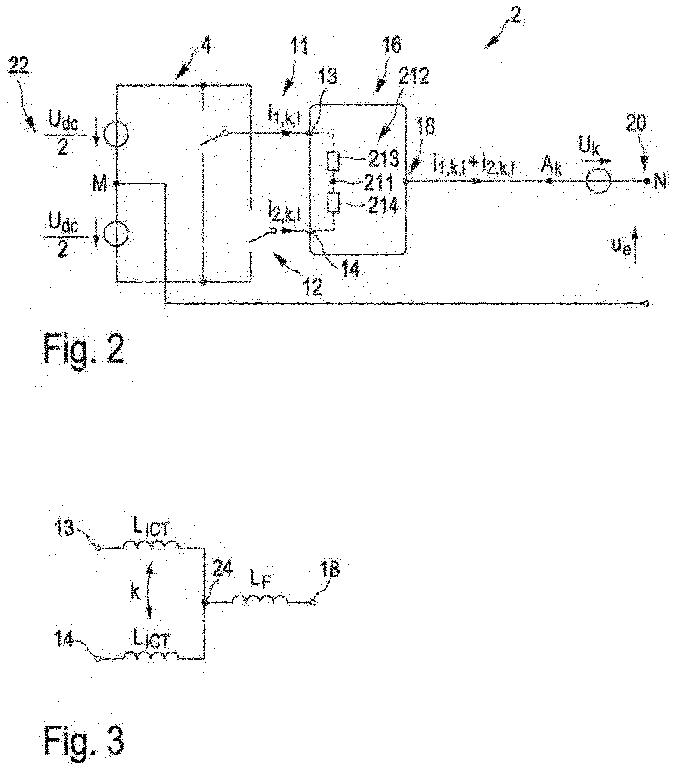

Figur 2 veranschaulicht schematisch einen Wechselrichter 2 mit einem ersten und einem zweiten Teilschaltmittel 11 bzw. 12. Die beiden Teilschaltmittel 11, 12 können jeweils zwischen einer oberen Spannung 4 bzw. positiven Spannung 4 und einer unteren Spannung 6 bzw. negativen Spannung 6 schalten. Dadurch können an dem ersten und zweiten Spannungsknoten 13 bzw. 14 Spannungspulse erzeugt werden, die nämlich zwischen der oberen Spannung 4 und der unteren Spannung 6 wechseln können. Für jedes Teilschaltmittel 11 bzw. 12 resultiert ein Teilstrom $i_{1,k,l}$ an dem ersten Spannungsknoten bzw. $i_{2,k,l}$ an dem zweiten Spannungsknoten 14. Diese beiden Teilströme $i_{1,k,l}$ und $i_{2,k,l}$ werden in dem Überlagerungsmittel 16 zu dem Summenstrom $i_{1,k,l}+i_{2,k,l}$ überlagert und an dem Ausgangsknoten 18 des Überlagerungsmittels 16 ausgegeben. Dieser Summenstrom wird dann an dem Netzknoten 20, der mit einem N bezeichnet ist, in ein elektrisches Versorgungsnetz eingespeist. Die beiden Teilströme und damit auch der Summenstrom hängen somit neben der Schaltstellung der Teilschaltmittel 11, 12 auch von einer Spannung in dem elektrischen Versorgungsnetz und dabei einer Spannung an dem Netzknoten 20 ab. Grundsätzlich kann das Verfahren zum Erzeugen eines Wechselstroms aber auch dafür verwendet werden, bspw. einen elektrischen Wechselstrommotor zu betreiben.

Eingangsseitig werden beide Teilschaltmittel von einem Gleichspannungszwischenkreis $U_{dc}$ versorgt, der hier einen Mittelabgriff M aufweist und dadurch in zwei gleich große Spannungen $U_{dc}/2$ aufgeteilt ist. Beide Teilschaltmittel 11 und 12 sind in dieser Ausführungsform mit demselben Gleichspannungszwischenkreis 22 verbunden.

In dem Überlagerungsmittel 16 kann eine Überlagerung der beiden Teilströme durch zwei gekoppelte Induktivitäten $L_{ICT}$ mit gemeinsamer, nicht gekoppelter Induktivität $L_F$ realisiert werden, wie sie in Figur 3 veranschaulichend dargestellt sind. Der Doppelpfeil mit dem Buchstaben k veranschaulicht die Kopplung der beiden Induktivitäten $L_{ICT}$. Bspw. könnten die beiden gekoppelten Induktivitäten $L_{ICT}$ der Figur 3 in dem Überlagerungsmittel 16 der Figur 2 an dem ersten und zweiten Spannungsknoten 13 bzw. 14 angeschlossen sein. Das wird nachfolgend auch zur Erläuterung zu Grunde gelegt. Zur Veranschaulichung sind diese beiden Spannungsknoten 13 und 14 auch in Figur 3 eingezeichnet. Die nicht gekoppelte Induktivität $L_F$ könnte entsprechend an dem Ausgangsknoten 18 des Überlagerungsmittels 16 der Figur 2 angeschlossen sein und auch dieses Bezugszeichen 18 ist entsprechend in Figur 3 eingezeichnet. Dennoch dient dies, besonders die Erläuterung der Figur 3, zur Veranschaulichung.

Jeweils eine der gekoppelten Induktivitäten $L_{ICT}$ bildet eine Drossel für das erste Teilschaltmittel 11 bzw. das zweite Teilschaltmittel 12.

Durch ein Schalten des ersten Teilschaltmittels 11 ändert sich somit eine Spannung an dem ersten Spannungsknoten 13. Ebenso ändert sich durch das Schalten des zweiten Teilschaltmittels 12 eine Spannung an dem zweiten Spannungsknoten 14. Außerdem ändert sich auch eine Spannung an dem Verbindungsknoten 24. Vereinfachend ausgedrückt werden somit die Spannungswerte an den beiden Spannungsknoten 13 und 14 jeweils zwischen zwei Werten geschaltet, wodurch sich an dem Verbindungsknoten 24 ein Wechsel zwischen drei Spannungen ergeben kann. Dies soll aber nur der Veranschaulichung dienen, denn während sich an den beiden Spannungsknoten 13 und 14 bei stabiler Spannung des Gleichspannungszwischenkreises 22 tatsächlich nur zwei Spannungswerte einstellen können, verändert sich natürlich die Spannung an dem Verbindungsknoten 24 auch durch die Veränderung der Ströme durch die in Figur 3 gezeigten Induktivitäten.

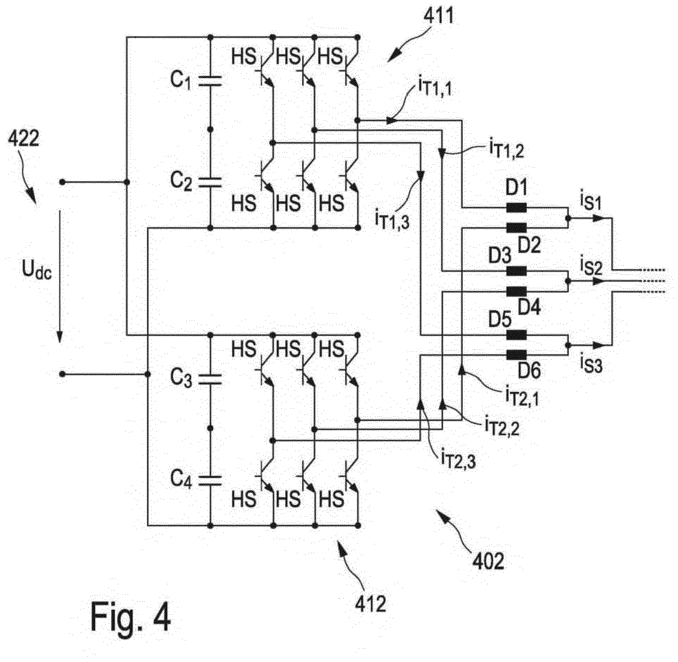

Figur 4 zeigt schematisch einen Wechselrichter 402, der dreiphasig ausgeführt ist. Auch der Wechselrichter 402 hat ein erstes und ein zweites Teilschaltmittel 411 bzw. 412. Diese beiden Teilschaltmittel 411 und 412 weisen jeweils eine B6-Brücke auf, die nur schematisch dargestellt ist, nämlich im Wesentlichen durch die sechs Halbleiterschalter HS. Weitere Details, wie Ansteuerleitungen oder Freilaufdioden sind der Einfachheit halber nicht dargestellt und im Übrigen ist eine B6-Brücke einschließlich ihrer Ansteuerung dem Fachmann dem Grunde nach bekannt. Jedenfalls bildet jeweils ein Zweig mit zwei Halbleiterschalter HS ein Schaltelement für eine Phase.

Entsprechend erzeugt das erste Teilschaltmittel 411 für jede Phase einen Teilstrom $i_{T1,1}$, $i_{T1,2}$, bzw. $i_{T1,3}$. Entsprechend erzeugt das zweite Teilschaltmittel 412 ebenfalls für jede Phase einen Teilstrom $i_{T2,1}$, $i_{T2,2}$ bzw. $i_{T2,3}$. Alle diese Teilströme durchfließen jeweils eine der sechs Drosseln D1 bis D6, um sich dann zu einem der Summenströme $i_{s1}$, $i_{s2}$ bzw. $i_{s3}$ zu überlagern. Die drei Summenströme $I_{s1}$ bis $I_{s3}$ bilden zusammen einen dreiphasigen Summenstrom, der in ein elektrisches Versorgungsnetz eingespeist werden kann, ggf. nach vorheriger Überlagerung mit weiteren dreiphasigen Summenströmen.

Als Versorgung erhalten beide Teilschaltmittel 411 und 412 eine Gleichspannungszwischenkreisspannung $U_{dc}$ an einem Gleichspannungszwischenkreis 422. Außerdem sind zur Spannungsglättung Zwischenkreiskondensatoren C1 bis C4 vorgesehen.

Die Drosseln D1 bis D6 können paarweise magnetisch gekoppelt sein, so dass die Drosseln D1 und D2 gekoppelt sind, die Drosseln D3 und D4 gekoppelt sind und die Drosseln D5 und D6 gekoppelt sind. Es kommt auch in Betracht, dass die Drosseln D1 bis D6 zwei gekoppelte dreiphasige Drosseln bilden.

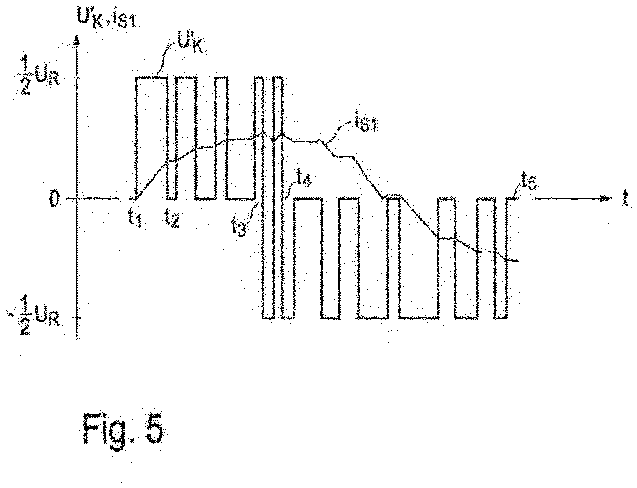

Figur 5 veranschaulicht in einem Ausschnitt einer schematischen Darstellung eine mögliche Art der Modulierung eines Summenstroms. Als Summenstrom ist hier beispielhaft ein erster Summenstrom $i_{s1}$ eingezeichnet. Zur Veranschaulichung von Spannungspulsen ist ein illustrativer Verlauf einer Spannung $U'_K$ zum Zwecke der Erläuterung eingezeichnet. Dieser Spannungsverlauf $U'_K$ ist tatsächlich nicht unmittelbar physikalisch messbar. Er könnte an dem Messpunkt 211 des angedeuteten hochohmigen Spannungsteilers 212 zwischen den Spannungsknoten 13 und 14 gemäß Figur 2 mit den Messwiderständen 213 und 214 messbar gemacht werden. Der Spannungsteiler 212 ist aber nicht vorgesehen und dient nur der Erläuterung.

Es ist zu erwähnen, dass diese Figur 5 das zugrundeliegende Prinzip basierend auf einem bekannten Dreipunktbetrieb erläutern möchte. Tatsächlich kommt es auf die Erzeugung des Summenstromes $i_{s1}$ an. Die tatsächliche Spannung wird auch durch den Strom beeinflusst werden können, so dass die Darstellung der Figur 5, gemäß der die Spannung nur drei Werte annimmt, zur Veranschaulichung dient.

Die Teildarstellung beginnt zum Zeitpunkt $t_1$. Zu dem Zeitpunkt wird angenommen, dass der Summenstrom $i_{s1}$ etwa den Wert 0 hat und ansteigen soll. Entsprechend dominieren zunächst positive Spannungspulse. Entsprechend beginnt die Darstellung des Spannungsverlaufs $U'_K$ mit einem breiten positiven Spannungspuls. Als Amplitude ist beispielhaft ein Gesamtspannungsbereich $U_R$ angegeben, so dass die Spannung $\frac{1}{2}U_R$ bis $-\frac{1}{2}U_R$ reicht. Jedenfalls ist der dargestellte positive Spannungspuls zum Zeitpunkt $t_1$ das Ergebnis davon, dass von einem Wechselrichter mit zwei Teilschaltmitteln, wie dies in Figur 2 gezeigt ist, beide Teilschaltmittel auf einen positiven oder hohen Spannungswert schalten. Nimmt der Spannungspuls wieder auf 0 ab, wie zum Zeitpunkt $t_2$ bedeutet das, dass einer der beiden Teilschaltmittel 11 oder 12, um auf die Figur 2 Bezug zu nehmen, nach unten auf eine niedrige oder negative Spannung geschaltet hat. Es wird also bis zum Zeitpunkt $t_3$ ein positives Pulsmuster erzeugt, das zwischen 0 und $\frac{1}{2}U_R$ wechselt. Dadurch ergibt sich ein steigender Strom $i_{s1}$, der mit abnehmender Dominanz des jeweils positiven Spannungsimpulses schwächer ansteigt. Bis zum Zeitpunkt $t_3$ ist somit ein oberer Dreipunktbetrieb dargestellt, weil nur zwischen 0 und einer positiven Spannung geschaltet wird.

Jedenfalls wird zum Zeitpunkt $t_3$ von dem dort dargestellten positiven Spannungspuls direkt auf einen dargestellten negativen Spannungspuls geschaltet und kurze Zeit später wieder zurück. Zum Zeitpunkt $t_4$ wird nochmals von dem positiven Spannungswert direkt auf den negativen Spannungswert geschalten. Vom Zeitpunkt $t_3$ bis zum Zeitpunkt $t_4$ liegt somit ein Zweipunktbetrieb vor. Es schalten also hier die beispielhaft genannten Teilschaltmittel 11 und 12 jeweils synchron. Dieser Zweipunktbetrieb soll somit möglichst kurz gehalten werden.

Ab dem Zeitpunkt $t_4$ schließt sich dann ein unterer Dreipunktbetrieb an, bei dem zwischen der Spannung 0 und der negativen Spannung geschaltet wird. Auch dies ist nur veranschaulichend zu verstehen. Dieser untere Dreipunktbetrieb wird somit so realisiert, dass bei dem negativen Spannungswert beide Teilschaltmittel 11 und 12 auf die untere Spannung geschaltet haben und bei dem Wert 0 eines dieser beiden Teilschaltmittel 11 und 12 auf den oberen Wert geschaltet hat. Es ist zu beachten, was unten noch erläutert wird, dass sowohl bei dem oberen Dreipunktbetrieb zwischen den Zeitpunkten $t_1$ und $t_3$ als auch dem unteren Dreipunktbetrieb zwischen den Zeitpunkten $t_4$ und $t_5$ zu Phasen, besonders bei langen Phasen, bei denen die Spannung den Wert 0 annimmt, die beispielhaft genannten Teilschaltmittel 11 und 12 ihre Stellung tauschen können. Es kann also dazwischen, dass das Teilschaltmittel 11 auf eine hohe und das Teilschaltmittel 12 auf niedrige Spannung geschaltet hat, gewechselt werden auf den Zustand, bei dem das erste Teilschaltmittel 11 auf einen niedrigen Spannungswert und das zweite Teilschaltmittel 11 auf einen hohen Spannungswert geschaltet wird und umgekehrt.

Zum Zeitpunkt $t_5$ könnte sich wieder ein kurzer Zweipunktbetrieb anschließen.

In der Figur 5 ist auch zu erkennen, dass sich dieser Zweipunktbetrieb in einem möglichst kurzen Übergangsbereich zwischen dem oberen Dreipunktbetrieb und dem unteren Dreipunktbetrieb befindet, bzw. sich zwischen einem unteren Dreipunktbetrieb und einem oberen Dreipunktbetrieb befindet, wie er sich zum Zeitpunkt $t_5$ anschließen würde.

Der Zweipunkt betrieb muss nicht unbedingt genau auf den Bereich fallen, in dem der Summenstrom maximal oder minimal ist. Seine Position hängt nämlich auch von der Netzspannung ab und der Phasenlage des Summenstroms in Bezug auf die Netzspannung.

Rein vorsorglich wird darauf hingewiesen, dass in der Realität natürlich deutlich mehr Schaltpulse für eine Halbwelle eines sinusförmigen Stromverlaufs gewählt werden.

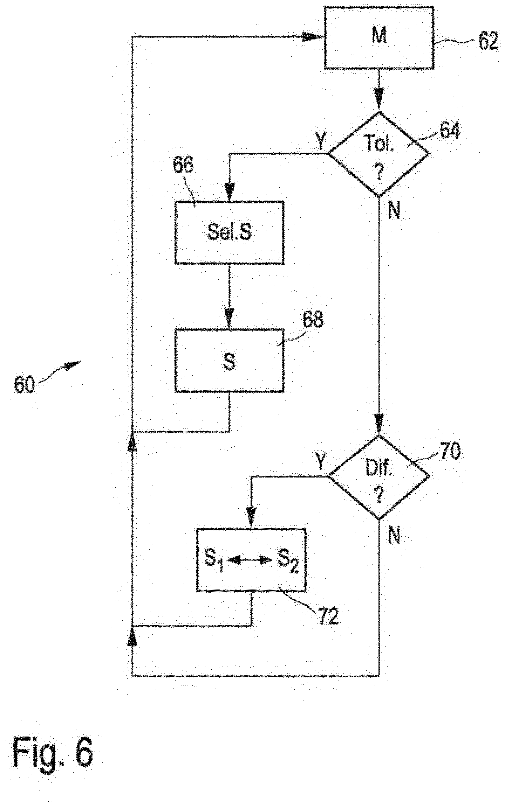

Figur 6 veranschaulicht einen Ablauf zum Durchführen des Verfahrens zum Erzeugen eines elektrischen Wechselstroms. Figur 6 zeigt dabei vereinfachend einen Ablauf 60, der im Wesentlichen kontinuierlich durchlaufen wird. In dem Messblock 62 werden die erzeugten Teilströme als auch der daraus überlagerte Summenstrom erfasst. Basierend auf den Messwerten wird im Toleranzblock 64 überprüft, ob der Summenstrom eine Toleranzgrenze erreicht hat. Wenn das der Fall ist, wird zu dem Auswahlblock 66 verzweigt, der auswählt, welcher Schalter geschaltet werden soll. Vereinfachend wird hier von einem Wechselrichter gemäß Figur 2 ausgegangen. Es wird dann also in dem Auswahlblock 66 ausgewählt, ob das erste Teilschaltmittel 11 oder das zweite Teilschaltmittel 12 schaltet. Befinden sich beide Teilschaltmittel 11 und 12 in derselben Stellung, also beide oben oder beide unten, so wird das Teilschaltmittel ausgewählt, dessen Strom dem Betrage nach am größten ist. Sind also beide Teilschaltmittel 11 und 12 nach oben geschaltet und ist der erste Teilstrom größer als der zweite Teilstrom, so wird das erste Teilschaltmittel 11 geschaltet.

Sind die beiden Teilschaltmittel 11 und 12 in einer unterschiedlichen Position, ist also der Wechselrichter insgesamt in einer neutralen Stellung, kommt grundsätzlich nur ein Schalter zum Schalten in Betracht, nämlich derjenige, der den Summenstrom wieder in das Toleranzband zurückführt. Stößt also bspw. der Summenstrom in einer Abwärtsbewegung an die untere Toleranzgrenze und ist ein Teilschaltmittel nach oben und das andere nach unten geschaltet, so ist das Teilschaltmittel, das nach unten geschaltet ist, nach oben zu schalten, um dadurch den Strom wieder zu erhöhen.

Dieses Schalten wird dann in dem Schaltblock 68 umgesetzt bzw. initiiert. Danach kehrt die Schleife im Grunde zum Messblock 62 zurück.

Wenn im Toleranzblock 64 erkannt wurde, dass der Summenstrom nicht an eine Grenze des Toleranzbandes gestoßen ist, wird im Differenzblock 70 überprüft, ob ein Differenzstrom an eine Grenze des Differenzbandes gestoßen ist. Dies findet allerdings nur dann statt, wenn die Neutralposition vorliegt, beide Teilschaltmittel also unterschiedliche Positionen aufweisen. Wurde erkannt, dass eine Grenze des Differenzbandes erreicht wurde, so erfolgt im Wechselblock 72 ein Wechsel der Schalterstellungen des ersten und zweiten Teilschaltmittels 11 und 12. Dabei wird davon ausgegangen, dass der Differenzstrom, jedenfalls in diesem Beispiel, bei dem nur zwei Teilschaltmittel 11 und 12 vorhanden sind, nur dann an eine Grenze des Differenzbandes stößt, wenn diese Teilschaltmittel unterschiedliche Stellungen aufweisen, denn dann sind die beiden Ströme gegenläufig, was zu einer Veränderung des Differenzstroms führt. Sollte bspw. der Differenzblock 70 häufiger erkennen, dass der Differenzstrom an eine Grenze des Differenzbandes stößt, als der Toleranzblock 64 erkennt, dass der Summenstrom an eine Grenze des Toleranzbandes stößt, wird vorgeschlagen, das Differenzband zu vergrößern.

In dem Verfahren zum Erzeugen des Wechselstroms ist außerdem noch eine Fangschaltung implementiert, die in dem Ablaufdiagramm der Figur 6 allerdings nicht enthalten ist. Diese Fangschaltung ist ständig aktiv und überprüft, ob der Summenstrom signifikant das Toleranzband verlassen hat. Da die Abfrage im Toleranzblock 64 mit den nachfolgenden Maßnahmen des Auswahlblocks 66 und Schaltblocks 68 den Summenstrom wieder in das Toleranzband zurückführen sollten, sollte diese Fangschaltung im Normalfall gar nicht zum Einsatz kommen. Dennoch ist sie vorsichtshalber vorgesehen. Sie funktioniert so, dass um das Toleranzband ein größeres Band herum gelegt wird, das als Kontrollband bezeichnet wird, und dass überprüft wird, ob dieses größere Band von dem Summenstrom erreicht wird. Ist das der Fall, muss der Summenstrom das Toleranzband noch weiter verlassen haben, nachdem bereits ein Erreichen der Grenzen des Toleranzbandes im Block 64 erkannt wurde und Gegenmaßnahmen der Blöcke 66 und 68 eingeleitet wurden.

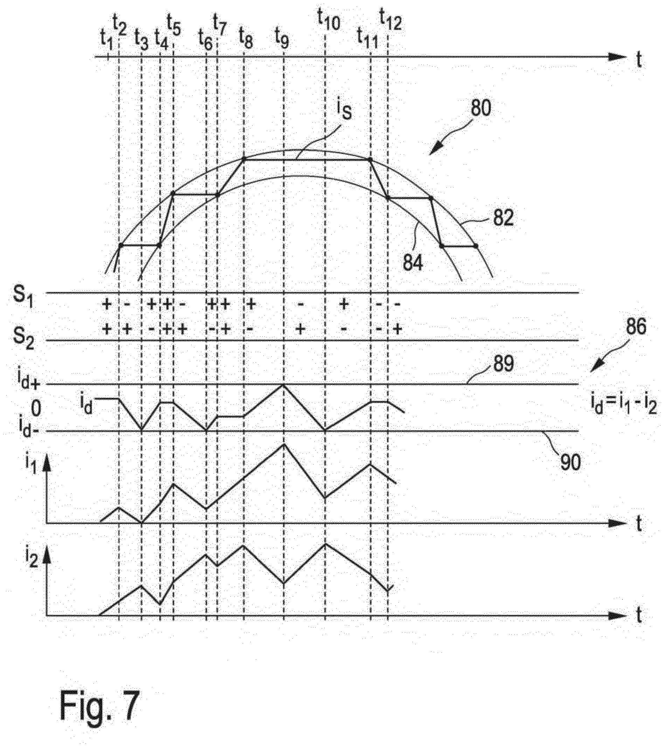

Figur 7 veranschaulicht in einem vereinfachten Beispiel die in dem Ablaufdiagramm der Figur 6 zugrundeliegenden Schaltkriterien. Dazu zeigt Figur 7 ein Toleranzband 80 eines Ausschnitts eines Summenstroms $i_s$. Das Toleranzband 80 hat eine obere Toleranzgrenze 82 und eine untere Toleranzgrenze 84.

Sämtliche Darstellungen der Figur 7 sind über die Zeit t aufgetragen und es liegt für eine Darstellung der Figur 7 dieselbe Zeitachse zugrunde. Auf eine Bemaßung wurde verzichtet, aber der Summenstrom $i_s$ zeigt etwa eine obere Halbwelle, so dass im Falle eines erwünschten sinusförmigen Verlaufs von 50Hz die Figur 7 etwa eine hundertstel Sekunde darstellt. Auf diese Genauigkeit kommt es aber nicht an, zumal Figur 7 nur sehr vereinfachend den Zusammenhang wiedergibt.

Außerdem sind in der Figur 7 die Schalterstellungen der Teilschaltmittel 11 und 12 als Schalter S1 und S2 dargestellt. Ein Pluszeichen gibt an, dass das entsprechende Teilschaltmittel nach oben geschaltet ist, nämlich auf eine obere oder positive Gleichspannung, und ein Minuszeichen gibt an, dass das betreffende Teilschaltmittel nach unten geschaltet ist, nämlich auf eine untere oder negative Gleichspannung.

Weiterhin ist unter den Schalterstellungen ein Differenzband 86 gezeigt mit einer oberen Differenzgrenze 88 und einer unteren Differenzgrenze 90.

Zum Zeitpunkt $t_1$, wobei diese Zeitpunkte nicht denen der Figur 5 entsprechen, sind beide Teilschaltmittel, also beide Schalter S1 und S2 nach oben geschaltet und der Summenstrom $i_s$ steigt an. Entsprechend steigen auch die beiden einzelnen Ströme $i_1$ und $i_2$ an, die jeweils in einem Diagramm unterhalb des Differenzbandes 86 als erster Teilstrom $i_1$ und zweiter Teilstrom $i_2$ aufgetragen sind. Es ist zu beachten, dass die Darstellung schematisch ist auch die Skalierung der Ströme $i_1$, $i_2$ und $i_s$ nicht exakt übereinstimmen müssen. Die beiden Teilströme $i_1$ und $i_2$ sind in dem Diagramm der Figur 7 aber gleich skaliert.

Jedenfalls steigen zum Zeitpunkt t1 beide Teilströme $i_1$ und $i_2$ an, wobei der erste Teilstrom $i_1$ geringfügig größer als der zweite Teilstrom $i_2$ ist.

Zum Zeitpunkt $t_2$ erreicht der Summenstrom $i_s$ die obere Toleranzgrenze 82 des Toleranzbandes 80. Da der erste Teilstrom $i_1$ etwas größer ist als der zweite Teilstrom $i_2$ wird der erste Schalter S1 geschaltet und ändert sich somit von Plus auf Minus. Die Schalterstellung des Schalters S2 bleibt. Der erste Teilstrom $i_1$ fällt dann also ab, während der zweite Teilstrom $i_2$ weiter steigt. Das führt dazu, dass der Differenzstrom $i_d$ fällt. Dabei wird hier der Differenzstrom $i_d$ definiert als $i_d=i_1-i_2$.

Da die Summe der beiden Teilströme $i_1$ und $i_2$ nun etwa 0 ist, ändert sich der Summenstrom $i_s$ nicht und hat zunächst einen waagerechten Verlauf.

Zum Zeitpunkt $t_3$ erreicht dann der Differenzstrom $i_d$ die untere Differenzgrenze 90. Daraufhin tauschen die Schalter S1 und S2 ihre Schalterstellung. Schalter S1 wird also hoch geschaltet und S2 wird herunter geschaltet. Der erste Teilstrom $i_1$ steigt also an und der zweite Teilstrom $i_2$ fällt ab. Dabei bleibt der Summenstrom weiterhin auf etwa konstantem Niveau. Der Differenzstrom steigt wieder an. Zum Zeitpunkt $t_4$ erreicht der Summenstrom $i_s$ die untere Toleranzgrenze 84. Der zweite Teilschalter S2 wird dann hoch geschaltet, so dass dann wieder beide Teilschalter S1 und S2 nach oben geschaltet sind. Zum Zeitpunkt $t_5$ erreicht dann der Summenstrom $i_s$ wieder die obere Toleranzgrenze 82. In diesem Fall ist wieder der erste Teilstrom $i_1$ größer als der zweite Teilstrom $t_2$, so dass der erste Schalter S1 nach unten geschaltet wird.

Zum Zeitpunkt $t_6$ erreicht dadurch der Differenzstrom $i_d$ wieder die untere Differenzgrenze, so dass die Schalterstellungen S1 und S2 vertauscht werden. Kurze Zeit später zum Zeitpunkt $t_7$ erreicht der Summenstrom $i_s$ die untere Toleranzgrenze und der zweite Schalter S2 wird somit wieder nach oben geschaltet, so dass dann wieder beide Schalter nach oben geschaltet sind.

Zum Zeitpunkt $t_{8'}$ erreicht der Summenstrom $i_s$ wieder die obere Toleranzgrenze 82. Diesmal ist der zweite Teilstrom $i_2$ größer als der erste Teilstrom $i_1$ und entsprechend wird der zweite Schalter S2, also das zweite Teilschaltmittel 12, nach unten geschaltet.

Der erste Teilstrom $i_1$ steigt also weiter an, während der zweite Teilstrom $i_2$ abfällt. Das führt dazu, dass der Differenzstrom $i_d$ ansteigt und zum Zeitpunkt $t_9$ die obere Differenzgrenze 88 erreicht. Die Schalter S1 und S2 tauschen dann ihre Stellung. Zum Zeitpunkt $t_{10}$ erreicht der Differenzstrom $i_d$ dann die untere Differenzgrenze 90 und die Schalter S1 und S2 tauschen abermals ihre Stellung.

Zum Zeitpunkt $t_{11}$ erreicht der Summenstrom $i_s$ wieder die obere Toleranzgrenze 82 und entsprechend wird der einzige in dem Moment nach oben geschaltete Schalter S1 nach unten geschaltet.

Zum Zeitpunkt $t_{12}$ erreicht der Summenstrom $i_s$ die untere Toleranzgrenze 84, während beide Schalter S1 und S2 nach unten geschaltet sind. Zu diesem Zeitpunkt ist der erste Teilstrom $i_1$ größer als der zweite Teilstrom $i_2$. Entsprechend wird der zweite Schalter S2 nach oben geschaltet, um die beiden Teilströme $i_1$ und $i_2$ sich besser anzugleichen.

Entsprechend wird diese Art der Schaltung kontinuierlich fortgesetzt.

Dieses Beispiel der Figur 7, das auch nur der Illustration dient, unterscheidet sich von dem Beispiel der Figur 5 darin, dass zwischen oberen Dreipunktbetrieb und unteren Dreipunktbetrieb kein Zweipunktbetrieb im Übergang durchgeführt wurde. Die Illustration der Figur 7 zeigt im Grunde einen oberen Dreipunktbetrieb bis zum Zeitpunkt $t_8$. Zum Zeitpunkt $t_8$ nimmt der obere Dreipunktbetrieb zunächst eine Mittelstellung ein, bei der nämlich immer einer der beiden Schalter S1 und S2 nach oben und einer nach unten geschaltet sind. Zum Zeitpunkt $t_{11}$ wird dann von dieser neutralen Stellung in den unteren Dreipunktbetrieb gewechselt. Es ist aber zu beachten, dass dies eine Veranschaulichung zum Erläutern des Verfahrens ist. Der lange Bereich mit einem konstanten Summenstrom $i_s$ vom Zeitpunkt $t_8$ bis zum Zeitpunkt $t_{11}$ dürfte so in der Realität nicht vorkommen, weil in der Realität das Toleranzband deutlich enger und im Ergebnis die Schaltfrequenz deutlich höher ist.

Es wurde somit in den Ausführungsformen eine Lösung im Detail beschrieben, die besonders zwei Teilschaltmittel kombiniert. Es können ganz generell aber auch, ohne die grundsätzliche zugrundeliegende Lehre zu verlassen, mehrere Teilschaltmittel kombiniert werden.

Grundsätzlich ist hier auch ein Problem angegangen worden, das darin besteht, zwei parallel geschaltete Leistungsteile mit approximiertem Gleitregimeregler auszustatten, so dass diese wie ein Dreipunktstromrichter wirken. D.h. insbesondere, dass pro Phase beide Leistungsteile auch komplementäre Schalterpositionen aufweisen können.

Wenn eine solche Konfiguration bspw. mit einem linearen Stromregler ausgestattet wird, fungiert die Konverterspannung als Stellgröße. Diese kann dann von einem Modulationsalgorithmus in diskrete Schaltsignale umgesetzt werden, der den vom Regler vorgegeben Wert in einen gemittelten Sinn realisiert. Dabei werden in der Praxis tatsächlich alle Spannungsstufen des Dreipunktstromrichters genutzt. Allerdings kann so kein Gleitregime erreicht werden, so dass bspw. eine schlechtere Unterdrückung von Störungen erreicht wird, als das bei approximierten Gleitregimereglern möglich ist. Auch dieses Problem lag der vorliegenden Erfindung zugrunde.

Wird hingegen ein approximierter Gleitregimeregler, bspw. ein Toleranzbandregler zur Regelung der Ströme verwendet, gibt es zwei Varianten.

Gemäß der ersten Variante werden für beide Leistungsteile unabhängige Stromregler verwendet. Bei einer solchen Realisierung können alle Spannungsstufen des Dreipunktstromrichters auftreten, jedoch geschieht dies unkontrolliert. Eine optimale Reduktion der mittleren Schaltfrequenz wäre damit nicht möglich.

Gemäß der zweiten Variante würde ein Stromregler für den resultierenden Strom beider Leistungsteile verwendet werden, so dass beide Leistungsteile praktisch synchron schalten. Das Auftreten komplementärer Schaltstellungen ist dann praktisch ausgeschlossen, was aber meist zu einer höheren mittleren Schaltfrequenz führt.

Auch diese Probleme wurden erkannt. Als Aufgabe der vorliegenden Erfindung wurde auch zugrundegelegt, den resultierenden Strom beider Leistungsteile als auch den Differenzstrom zu regeln, wobei für beide Ströme unabhängig voneinander Toleranzbänder vorgegeben werden können, was erfindungsgemäß erkannt wurde. Zusätzlich soll die Erfindung möglichst sicherstellen, dass auch komplementäre Schalterstellungen pro Phase auftreten, so dass eine möglichst geringe mittlere Schaltfrequenz erreicht wird. Außerdem soll die Erfindung auch den Fall abdecken, wenn die Drosseln beide Leistungsteile magnetisch miteinander gekoppelt sind.

Gedanken der bereits erfindungsgemäß beschriebenen Lösung sind u.a., dass es einen überlagerten Regler für den Summenstrom und einen unterlagerten Regler für den Differenzstrom gibt. Zur Regelung des Summenstroms wird dann die Schalterkombination ausgewählt, die zu einer möglichst geringen Schaltfrequenz führt. Auch das wurde schon beispielhaft im Detail erläutert.

Eine Lehre der Erfindung ist somit, die Parallelschaltung der Leistungsteile, die synonym hier auch als Teilschaltmittel bezeichnet werden können, aus Sicht des Summenstroms als Dreipunktstromrichter aufzufassen und für diesen einen Regler zu entwerfen. Bei dem Entwurf des Reglers kann dann eine magnetische Kopplung der Drosseln berücksichtigt werden.

Ein wesentlicher Vorteil der Erfindung ist, dass nicht sofort der maximale Stellbereich ausgenutzt wird, wie dies häufig bei approximierten Gleitregimereglern der Fall ist. Dadurch kann die mittlere Schaltfrequenz reduziert werden und gleichzeitig bleiben die positiven Eigenschaften einer Gleitregimeregelung erhalten. Bspw. die gute Unterdrückung von Störungen und das relativ schnelle Reaktionsvermögen.

**Patentansprüche**

1. Verfahren zum Erzeugen eines elektrischen Wechselstroms umfassend die Schritte

   - Erzeugen mehrerer Teilströme ($i_{1,k,l}$, $i_{2,k,l}$),
   - Überlagern der Teilströme ($i_{1,k,l}$, $i_{2,k,l}$) zu einem Summenstrom ($i_{1,k,l}+i_{2,k,l}$), wobei
   - jeder Teilstrom ($i_{1,k,l}$) durch Spannungspulse moduliert wird und die Spannungspulse für jeden Teilstrom ($i_{1,k,l}$) durch ein Teilschaltmittel (11, 12) erzeugt werden, indem das Teilschaltmittel (11, 12) durch Schalten zwischen unterschiedlichen Eingangsspannungen die Spannungspulse erzeugt, und
   - Vorgeben eines Toleranzbandes (80) für den Summenstrom ($i_{1,k,l}+i_{2,k,l}$) mit einer oberen und einer unteren Toleranzgrenze (84), wobei
   - der Summenstrom ($i_{1,k,l}+i_{2,k,l}$) erfasst wird und das Schalten jedes Teilschaltmittels (11, 12,) zum Erzeugen der Spannungspulse zum Modulieren des Teilstroms ($i_{1,k,l}$) in Abhängigkeit des erfassten Summenstromes ($i_{1,k,l}+i_{2,k,l}$) in Bezug auf das Toleranzband (80) gesteuert wird, und das Schalten der mehreren Teilschaltmitteln (11, 12) zumindest teilweise, insbesondere überwiegend zueinander nicht synchron erfolgt, wobei
   - wenigstens ein Differenzstrom (id) als Differenz zwischen zwei Teilströmen (i1,k,l, i2,k,l) erfasst wird und das Schalten in den Teilschaltmitteln (11, 12) zusätzlich in Abhängigkeit des Differenzstroms (id) erfolgt, **dadurch gekennzeichnet, dass** für den wenigstens einen Differenzstrom (id) ein Differenzband (86) vorgegeben wird, mit einer oberen und einer unteren Differenzgrenze (90) und wenigstens zwei der Teilschaltmittel (11, 12) zu einander entgegengesetzt geschaltet werden, wenn der Differenzstrom ($i_d$) die obere oder untere Differenzgrenze (90) erreicht.

2. Verfahren nach Anspruch 1, **dadurch gekennzeichnet, dass** wenigstens ein Teilschaltmittel (11, 12) geschaltet wird, wenn der erfasste Summenstrom ($i_{1,k,l}+i_{2,k,l}$) die obere oder untere Toleranzgrenze (84) erreicht.

3. Verfahren nach Anspruch 1 oder 2, **dadurch gekennzeichnet, dass** zum Schalten wenigstens eines der Teilschaltmittel (11, 12) ausgewählt wird und die Auswahl in Abhängigkeit einer die Teilströme ($i_{1,k,l}$, $i_{2,k,l}$) bewertenden Auswahlfunktion erfolgt, insbesondere so, dass dann, wenn der erfasste Summenstrom ($i_{1,k,l}+i_{2,k,l}$)

die obere oder untere Toleranzgrenze (82, 84) erreicht, zum Schalten das Teilschaltmittel (11, 12) ausgewählt wird, dessen Teilstrom ($i_{1,k,l}$) in dem Moment dem Betrage nach am größten ist.

4. Verfahren nach einem der vorstehenden Ansprüche, **dadurch gekennzeichnet, dass**
   überwacht wird, ob der Summenstrom ($i_{1,k,l}+i_{2,k,l}$) nach Erreichen der oberen oder unteren Toleranzgrenze (82, 84) und nach einem dadurch ausgelösten Schalten eines der Teilschaltmittel (11, 12) das Toleranzband (80) nicht verlassen hat, wobei wenigstens ein weiteres Teilschaltmittel (11, 12) geschaltet wird, wenn der Summenstrom ($i_{1,k,l}+i_{2,k,l}$) das Toleranzband (80) verlassen hat, insbesondere wenn der Summenstrom ($i_{1,k,l}+i_{2,k,l}$) eine erweiterte Obergrenze bzw. erweiterte Untergrenze eines das Toleranzband (80) umgebenden Kontrollbandes erreicht hat.

5. Verfahren nach einem der vorstehenden Ansprüche, **dadurch gekennzeichnet, dass**
   ein Abstand des Differenzbandes (86) zwischen oberer und unterer Differenzgrenze (88, 90) größer ist als ein Abstand des Toleranzbandes (80) zwischen oberer und unterer Toleranzgrenze (82, 84), insbesondere dass ein Bandverhältnis als Verhältnis des Abstands des Toleranzbandes (80) zum Abstand des Differenzbandes (86) einstellbar ist und insbesondere größer als 1,5 insbesondere größer als 2 vorgegeben wird.

6. Verfahren nach einem der vorstehenden Ansprüche, **dadurch gekennzeichnet, dass**
   das Toleranzband (80) und/oder das Differenzband (86) veränderlich sind, insbesondere dass die obere und untere Toleranzgrenze (82, 84) veränderlich sind und/oder der Abstand des Toleranzbandes (80) zwischen oberer und unterer Toleranzgrenze (82, 84) und/oder der Abstand des Differenzbandes (86) zwischen oberer und unterer Differenzgrenze (88, 90) veränderlich sind.

7. Verfahren nach einem der vorstehenden Ansprüche, **dadurch gekennzeichnet, dass**
   jedes Teilschaltmittel (11, 12) einen Stromausgang zum Ausgeben des Teilstromes ($i_{1,k,l}$) aufweist und an jedem Stromausgang eine elektrische Drossel zum Führen des Teilstroms ($i_{1,k,l}$) angeordnet ist und die Drosseln (D1 bis D6) magnetisch gekoppelt sind.

8. Verfahren nach einem der vorstehenden Ansprüche, **dadurch gekennzeichnet, dass**

   - mehrere Teilschaltmittel (11, 12) zu einer Wechselrichtervorrichtung zusammengefasst sind und die Wechselrichtervorrichtung den Summenstrom ($i_{1,k,l}+i_{2,k,l}$) als Ausgangsstrom ausgibt und
   - mehrere Wechselrichtervorrichtungen parallel geschaltet sind und ihre Ausgangsströme zu einem Gesamtstrom überlagert werden, insbesondere um den Gesamtstrom in ein elektrisches Versorgungsnetz einzuspeisen.

9. Verfahren nach einem der vorstehenden Ansprüche, **dadurch gekennzeichnet, dass**
   jeweils zwei Teilschaltmittel (11, 12) zu einer bzw. der Wechselrichtervorrichtung zusammengefasst sind, so dass sich genau zwei Teilströme ($i_{1,k,l}$, $i_{2,k,l}$) zu einem Summenstrom ($i_{1,k,l}+i_{2,k,l}$) überlagern, wobei insbesondere jede Wechselrichtervorrichtung zwei magnetisch gekoppelte Drosseln (D1 bis D6) als Ausgangsdrosseln aufweist.

10. Verfahren nach einem der vorstehenden Ansprüche, **dadurch gekennzeichnet, dass**
    zwei bzw. die zwei Teilschaltungen so zusammenwirken, dass

    - sie zwei Teilströme ($i_{1,k,l}$, $i_{2,k,l}$) erzeugen, die zu dem Summenstrom ($i_{1,k,l}+i_{2,k,l}$) überlagert werden und
    - jede der beiden Teilschaltungen zwischen einer oberen und einer unteren Schalterstellung schalten kann, wobei
    - sich der Summenstrom ($i_{1,k,l}+i_{2,k,l}$) erhöht, wenn beide Teilschalteinheiten in der oberen Schalterstellung sind und damit zusammen eine positive Stellung einnehmen,
    - sich der Summenstrom ($i_{1,k,l}+i_{2,k,l}$) verringert, wenn beide Teilschalteinheiten in der unteren Schalterstellung sind und damit zusammen eine negative Stellung einnehmen, und
    - sich der Summenstrom ($i_{1,k,l}+i_{2,k,l}$) nicht oder wenig verändert, wenn die beiden Teilschalteinheiten in unterschiedlichen Schalterstellungen sind und damit zusammen eine neutrale Stellung einnehmen.

11. Verfahren nach Anspruch 10, **dadurch gekennzeichnet, dass**

    - zum Modulieren des Summenstroms ($i_{1,k,l}+i_{2,k,l}$) ausgewählt werden kann zwischen einem oberen Dreipunktbetrieb, einem unteren Dreipunktbetrieb und einem Zweipunktbetrieb, wobei
    - in dem oberen Dreipunktbetrieb zwischen der positiven und der neutralen Stellung geschaltet wird,
    - in dem unteren Dreipunktbetrieb zwischen der negativen und der neutralen Stellung geschaltet wird und
    - in dem Zweipunktbetrieb zwischen der positiven und negativen Stellung geschaltet wird.

**12.** Verfahren nach Anspruch 11,
**dadurch gekennzeichnet, dass**
in einem Übergang von einer Modulation im oberen Dreipunktbetrieb zu einer Modulation im unteren Dreipunktbetrieb eine Modulation im Zweipunktbetrieb erfolgt.

**13.** Verfahren nach Anspruch 11 oder 12,
**dadurch gekennzeichnet, dass**
zwischen der Modulation im oberen Dreipunktbetrieb und der Modulation im unteren Dreipunktbetrieb und der Modulation im Zweipunktbetrieb in Abhängigkeit einer Netzspannung eines elektrischen Netzes, in das eingespeist werden soll, und/oder in Abhängigkeit einer Phasenlage des Summenstroms $(i_{1,k,l}+i_{2,k,l})$ in Bezug auf die Netzspannung ausgewählt wird.

**14.** Verfahren nach einem der vorstehenden Ansprüche,
**dadurch gekennzeichnet, dass**
jedes Teilschaltmittel (11, 12) einen dreiphasigen Teilstrom $(i_{1,k,l})$ erzeugt und insbesondere jede Wechselrichtervorrichtung einen dreiphasigen Summenstrom $(i_{1,k,l}+i_{2,k,l})$ ausgibt, insbesondere dass jeder dreiphasige Strom in ein transformiertes System transformiert wird, insbesondere in ein $\alpha/\beta/0$-System, und dass besonders eine Berechnung eines bzw. des Differenzstromes $(i_d)$ in dem transformierten System erfolgt.

**15.** Verfahren nach einem der vorstehenden Ansprüche,
**dadurch gekennzeichnet, dass**
der Summenstrom $(i_{1,k,l}+i_{2,k,l})$ oder ein bzw. der aus mehreren Summenströmen $(i_{1,k,l}+i_{2,k,l})$ zusammengesetzte Gesamtstrom in ein elektrisches Versorgungsnetz eingespeist wird, so dass das Verfahren zum Erzeugen eines elektrischen Wechselstroms als Verfahren zum Einspeisen elektrischer Leistung in ein elektrisches Versorgungsnetz ausgebildet ist.

**16.** Wechselrichter (2) zum Erzeugen eines elektrischen Wechselstroms umfassend

- wenigstens einen Gleichspannungszwischenkreis mit einer ersten und einer zweiten Gleichspannung,
- mehrere Teilschaltmittel (11, 12), jeweils zum Erzeugen eines Teilstroms $(i_{1,k,l})$, wobei
- jedes Teilschaltmittel (11, 12) dazu vorbereitet ist, durch Spannungspulse den Teilstrom $(i_{1,k,l})$ zu modulieren, indem das Teilschaltmittel (11, 12) dazu vorbereitet ist, durch Schalten zwischen der ersten und zweiten Gleichspannung die Spannungspulse zu erzeugen,
- ein Überlagerungsmittel (16) zum Überlagern der Teilströme $(i_{1,k,l},\ i_{2,k,l})$ zu einem Summenstrom $(i_{1,k,l}+i_{2,k,l})$,
- ein Stromerfassungsmittel zum Erfassen des Summenstroms $(i_{1,k,l}+i_{2,k,l})$,
- ein Ausgabemittel zum Ausgeben des Summenstroms $(i_{1,k,l}+i_{2,k,l})$ als den zu erzeugenden Wechselstrom,
- ein Prozessrechenmittel zum Vorgeben eines Toleranzbandes (80) für den Summenstrom $(i_{1,k,l}+i_{2,k,l})$ mit einer oberen und einer unteren Toleranzgrenze (82, 84),
- ein Steuermittel vorbereitet zum Steuern jedes Teilschaltmittels (11, 12,) in Abhängigkeit des erfassten Summenstromes $(i_{1,k,l}+i_{2,k,l})$ und in Abhängigkeit der Toleranzgrenze (82, 84), wobei
- das Steuermittel funktional mit dem Prozessrechenmittel verbunden ist, um durch das Prozessrechenmittel geführt die Teilschaltmittel (11, 12) zu steuern, und
- das Prozessrechenmittel und das Steuermittel so vorbereitet sind, dass das Schalten der mehreren Teilschaltmittel (11, 12) nach einem der Ansprüche 1 bis 15 und zumindest teilweise, insbesondere überwiegend zueinander nicht synchron erfolgt.

**17.** Wechselrichter (2, 402) nach Anspruch 16,
**dadurch gekennzeichnet, dass**
der Wechselrichter (2, 402), insbesondere das Prozessrechenmittel dazu vorbereitet ist, mit weiteren gleichartigen Wechselrichtern (2, 402) gekoppelt zu werden, insbesondere so, dass der ausgegebene Summenstrom $(i_{1,k,l}+i_{2,k,l})$ mit weiteren Summenströmen zu einem Gesamtstrom überlagert wird.

**18.** Wechselrichter (2, 402) nach Anspruch 16 oder 17,
**dadurch gekennzeichnet, dass**
zwischen jedem Teilschaltmittel (11, 12) und dem Überlagerungsmittel (16) eine Drossel verschaltet ist und diese Drosseln magnetisch gekoppelt sind.

**19.** Wechselrichter (2, 402) nach einem der Ansprüche 16 bis 18,
**dadurch gekennzeichnet, dass**
er genau zwei Teilschaltmittel (11, 12) aufweist.

**20.** Einspeiseanordnung mit mehreren Wechselrichtern (2, 402) gemäß einem der Ansprüche 16 bis 19, wobei die Wechselrichter (2, 402) an ihren Ausgabemitteln so parallel geschaltet sind, dass sich die Summenströme zu einem Gesamtstrom überlagern.

**21.** Einspeiseanordnung nach Anspruch 20,
**dadurch gekennzeichnet, dass**
die Wechselrichter (2, 402), insbesondere ihre Prozessrechenmittel, untereinander gekoppelt sind, um Informationen auszutauschen, um das Erzeugen der Summenströme zwischen den Wechselrichtern (2, 402) zu koordinieren.

22. Windenergieanlage (100) mit einem aerodynamischen Rotor (106) und einem Generator zum Erzeugen elektrischer Leistung aus Wind und zum Einspeisen der Leistung als elektrischen Strom in ein elektrisches Versorgungsnetz, wobei die Windenergieanlage (100) zum Erzeugen des elektrischen Stroms wenigstens einen Wechselrichter (2, 402) nach einem der Ansprüche 16 bis 19 und/oder wenigstens eine Einspeiseanordnung nach einem der Ansprüche 20 und 21 aufweist.

## Claims

1. A method for generating an alternating electric current comprising the following steps

   - generating a plurality of component currents ($i_{1,k,l}$, $i_{2,k,l}$),
   - superposing the component currents ($i_{1,k,l}$, $i_{2,k,l}$) to form a summation current ($i_{1,k,l}+i_{2,k,l}$), wherein
   - each component current ($i_{1,k,l}$) is modulated by voltage pulses and the voltage pulses are generated for each component current ($i_{1,k,l}$) through a component switching means (11, 12) by virtue of the component switching means (11, 12) generating the voltage pulses by switching between different input voltages, and
   - specifying a tolerance band (80) for the summation current ($i_{1,k,l}+i_{2,k,l}$) having an upper and a lower tolerance limit (84), wherein
   - the summation current ($i_{1,k,l}+i_{2,k,l}$) is detected and the switching of each component switching means (11, 12) is controlled to generate the voltage pulses for modulating the component current ($i_{1,k,l}$) depending on the detected summation current ($i_{1,k,l}+i_{2,k,l}$) with respect to the tolerance band (80), and the plurality of component switching means (11, 12) are switched at least partly, in particular predominantly, in a manner asynchronous with respect to one another, wherein
   - at least one difference current ($i_d$) is detected as the difference between two component currents ($i_{1,k,l}$, $i_{2,k,l}$) and the switching in the component switching means (11, 12) is effected additionally depending on the difference current (id),

   **characterized in that**
   for the at least one difference current ($i_d$), a difference band (86) is specified, having an upper and a lower difference limit (90) and at least two of the component switching means (11, 12) are switched opposite to one another when the difference current ($i_d$) reaches the upper or lower difference limit (90).

2. The method as claimed in claim 1,
   **characterized in that**
   at least one component switching means (11, 12) is switched when the detected summation current ($i_{1,k,l}+i_{2,k,l}$) reaches the upper or lower tolerance limit (84).

3. The method as claimed in claim 1 or 2,
   **characterized in that**
   at least one of the component switching means (11, 12) is selected for switching and the selection is effected depending on a selection function that evaluates the component currents ($i_{1,k,l}$, $i_{2,k,l}$), in particular in such a way that, when the detected summation current ($i_{1,k,l}+i_{2,k,l}$) reaches the upper or lower tolerance limit (82, 84), the component switching means (11, 12) whose component current ($i_{1,k,l}$) is presently the greatest in terms of magnitude is selected for switching.

4. The method as claimed in one of the preceding claims,
   **characterized in that**
   monitoring is carried out to determine whether, after reaching the upper or lower tolerance range (82, 84) and after switching of one of the component switching means (11, 12) triggered thereby, the summation current ($i_{1,k,l}+i_{2,k,l}$) has not left the tolerance band (80), wherein at least one further component switching means (11, 12) is switched when the summation current ($i_{1,k,l}+i_{2,k,l}$) has left the tolerance band (80), in particular when the summation current ($i_{1,k,l}+i_{2,k,l}$) has reached an extended upper limit or extended lower limit of a control band that surrounds the tolerance band (80).

5. The method as claimed in one of the preceding claims,
   **characterized in that**
   a spacing of the difference band (86) between the upper and lower difference limit (88, 90) is greater than a spacing of the tolerance band (80) between the upper and lower tolerance limit (82, 84), in particular **in that** a band ratio can be set as the ratio of the spacing of the tolerance band (80) to the spacing of the difference band (86) and is specified, in particular, as greater than 1.5, in particular greater than 2.

6. The method as claimed in one of the preceding claims,
   **characterized in that**
   the tolerance band (80) and/or the difference band (86) are variable, in particular **in that** the upper and lower tolerance limit (82, 84) are variable and/or the spacing of the tolerance band (80) between the upper and lower tolerance limit (82, 84) and/or the spacing of the difference band (86) between the upper and lower difference limit (88, 90) are variable.

7. The method as claimed in one of the preceding claims,
**characterized in that**
each component switching means (11, 12) has a current output for outputting the component current ($i_{1,k,l}$) and an electrical inductor for conducting the component current ($i_{1,k,l}$) is arranged at each current output and the inductors (D1 to D6) are magnetically coupled.

8. The method as claimed in one of the preceding claims,
**characterized in that**

     - a plurality of component switching (11, 12) means are combined to form an inverter apparatus and the inverter apparatus outputs the summation current ($i_{1,k,l}+i_{2,k,l}$) as output current and
     - a plurality of inverter apparatuses are connected in parallel and their output currents are superposed to form a total current, in particular in order to feed the total current into an electrical supply network.

9. The method as claimed in one of the preceding claims,
**characterized in that**
in each case two component switching means (11, 12) are combined to form a or the inverter apparatus so that exactly two component currents ($i_{1,k,l}$, $i_{2,k,l}$) are superposed to form a summation current ($i_{1,k,l}+i_{2,k,l}$), wherein, in particular, each inverter apparatus has two magnetically coupled inductors (D1 to D6) as output inductors.

10. The method as claimed in one of the preceding claims,
**characterized in that**
two or the two component circuits interact so that

     - they generate two component currents ($i_{1,k,l}$, $i_{2,k,l}$), which are superposed to form the summation current ($i_{1,k,l}+i_{2,k,l}$), and
     - each of the two component circuits can switch between an upper and a lower switch position, wherein
     - the summation current ($i_{1,k,l}+i_{2,k,l}$) increases when both component switching units are in the upper switch position and hence together assume a positive position,
     - the summation current ($i_{1,k,l}+i_{2,k,l}$) decreases when both component switching units are in the lower switch position and hence together assume a negative position, and
     - the summation current ($i_{1,k,l}+i_{2,k,l}$) does not change or changes little when the two component switching units are in different switch positions and hence together assume a neutral position.

11. The method as claimed in claim 10,
**characterized in that**,

     - to modulate the summation current ($i_{1,k,l}+i_{2,k,l}$), it is possible to select between an upper three-point operation, a lower three-point operation and a two-point operation, wherein,
     - in the upper three-point operation, there is switching between the positive and the neutral position,
     - in the lower three-point operation, there is switching between the negative and the neutral position, and
     - in the two-point operation, there is switching between the positive and the negative position.

12. The method as claimed in claim 11,
**characterized in that**
modulation in the two-point operation takes places in a transition from modulation in the upper three-point operation to modulation in the lower three-point operation.

13. The method as claimed in claim 11 or 12,
**characterized in that**
there is a selection between the modulation in the upper three-point operation and the modulation in the lower three-point operation and the modulation in the two-point operation depending on a network voltage of an electrical network, which is intended to receive an infeed, and/or depending on a phase position of the summation current ($i_{1,k,l}+i_{2,k,l}$) with respect to the network voltage.

14. The method as claimed in one of the preceding claims,
**characterized in that**
each component switching means (11, 12) generates a three-phase component current ($i_{1,k,l}$) and, in particular, each inverter apparatus outputs a three-phase summation current ($i_{1,k,l}+i_{2,k,l}$), in particular **in that** each three-phase current is transformed to a transformed system, in particular an $\alpha/\beta/0$ system, and **in that**, particularly, a or the difference current ($i_d$) in the transformed system is calculated.

15. The method as claimed in one of the preceding claims,
**characterized in that**
the summation current ($i_{1,k,l}+i_{2,k,l}$) or a or the total current composed of a plurality of summation currents ($i_{1,k,l}+i_{2,k,l}$) is fed into an electrical supply network so that the method for generating an alternating electric current is configured as a method for feeding electrical power into an electrical supply network.

16. An inverter (2) for generating an alternating electric current comprising

    - at least one DC voltage intermediate circuit having a first and a second DC voltage,
    - a plurality of component switching means (11, 12), each for generating a component current ($i_{1,k,l}$), wherein
    - each component switching means (11, 12) is prepared to modulate the component current ($i_{1,k,l}$) by voltage pulses by virtue of the component switching means (11, 12) being prepared to generate the voltage pulses by switching between the first and second DC voltage,
    - a superposition means (16) for superposing the component currents ($i_{1,k,l}$, $i_{2,k,l}$) to form a summation current ($i_{1,k,l}+i_{2,k,l}$),
    - a current detection means for detecting the summation current ($i_{1,k,l}+i_{2,k,l}$),
    - an output means for outputting the summation current ($i_{1,k,l}+i_{2,k,l}$) as the alternating current that is to be generated,
    - a process computation means for specifying a tolerance band (80) for the summation current ($i_{1,k,l}+i_{2,k,l}$) having an upper and a lower tolerance limit (82, 84),
    - a control means prepared to control each component switching means (11, 12) depending on the detected summation current ($i_{1,k,l}+i_{2,k,l}$) and depending on the tolerance limit (82, 84), wherein
    - the control means is functionally connected to the process computation means in order to control the component switching means (11, 12) in a manner guided by the process computation means, and
    - the process computation means and the control means are prepared so that the plurality of component switching means (11, 12) as claimed in one of claims 1 to 15 and are switched at least partly, in particular predominantly, in a manner asynchronous with respect to one another.

17. The inverter as claimed in claim 16,
    **characterized in that**
    the inverter (2, 402), in particular the process computation means, is prepared to be coupled to further similar inverters (2, 402), in particular so that the output summation current ($i_{1,k,l}+i_{2,k,l}$) is superposed with further summation currents to form a total current.

18. The inverter (2, 402) as claimed in claim 16 or 17,
    **characterized in that**
    an inductor is interconnected between each component switching means (11, 12) and the superposition means (16) and said inductors (D1 to D6) are magnetically coupled.

19. The inverter (2, 402) as claimed in one of claims 16 to 18,
    **characterized in that**
    said inverter has exactly two component switching means (11, 12).

20. An infeed arrangement having a plurality of inverters (2, 402) as claimed in claims 16 to 19, wherein the inverters (2, 402) are connected in parallel at their output means so that the summation currents are superposed to form a total current.

21. The infeed arrangement as claimed in claim 20,
    **characterized in that**
    the inverters (2, 402), in particular the process computation means thereof, are coupled among one another in order to exchange information in order to coordinate the generation of the summation currents between the inverters (2, 402).

22. A wind power installation (100) having an aerodynamic rotor (106) and a generator for generating electrical power from wind and for feeding the power as electric current into an electrical supply network, wherein the wind power installation (100) has at least one inverter (2, 402) as claimed in one of claims 16 to 19 for generating the electric current and/or at least one infeed arrangement as claimed in either of claims 20 and 21.

**Revendications**

1. Procédé de génération d'un courant alternatif électrique, comprenant les étapes

    - de génération de plusieurs courants partiels ($i_{1,k,l}$, $i_{2,k,l}$)
    - de superposition des courants partiels ($i_{1,k,l}$, $i_{2,k,l}$) en un courant cumulé ($i_{1,k,l}+i_{2,k,l}$), dans lequel
    - chaque courant partiel ($i_{1,k,l}$) est modulé par des impulsions de tension et les impulsions de tension sont générées pour chaque courant partiel ($i_{1,k,l}$) par un moyen de commutation partielle (11, 12) en ce que le moyen de commutation partielle (11, 12) génère les impulsions de tension du fait de la commutation entre différentes tensions d'entrée, et
    - de spécification d'une bande de tolérance (80) pour le courant cumulé ($i_{1,k,l}+i_{2,k,l}$) avec une limite de tolérance supérieure et une limite de tolérance inférieure (84),
    dans lequel
    - le courant cumulé ($i_{1,k,l}+i_{2,k,l}$) est détecté et la commutation de chaque moyen de commutation partielle (11, 12) pour générer les impulsions de tension est commandée pour moduler le courant partiel ($i_{1,k,l}$) en fonction du courant cumulé ($i_{1,k,l}$+$i_{2,k,l}$) détecté par rapport à la bande de tolérance (80), et la commutation des plusieurs moyens de commutation partielle (11, 12) est effectuée au moins en partie, en particulier majoritairement de manière non synchrone les uns par rapport aux autres, dans lequel

- au moins un courant différentiel (id) est détecté en tant que différence entre deux courants partiels (i1,k,l, i2,k,l) et la commutation dans les moyens de commutation partielle (11, 12) est effectuée en supplément en fonction du courant différentiel (id), **caractérisé en ce qu'**est spécifiée pour l'au moins un courant différentiel (id) une bande de différence (86) avec une limite de différence supérieure et une limite de différence inférieure (90) et au moins deux des moyens de commutation partielle (11, 12) sont commutés à l'opposé l'un par rapport à l'autre quand le courant différentiel ($i_d$) atteint la limite de différence supérieure ou inférieure (90).

2. Procédé selon la revendication 1,
   **caractérisé en ce que**
   au moins un moyen de commutation partielle (11, 12) est commuté quand le courant cumulé ($i_{1,k,l}$+$i_{2,k,l}$) détecté atteint la limite de tolérance supérieure ou inférieure (84).

3. Procédé selon la revendication 1 ou 2, **caractérisé en ce que**
   pour la commutation au moins un des moyens de commutation partielle (11, 12) est choisi et le choix est effectué en fonction d'une fonctionnalité de choix évaluant les courants partiels ($i_{1,k,l}$, $i_{2,k,l}$) en particulier de telle sorte que, quand le courant cumulé ($i_{1,k,l}$+$i_{2,k,l}$) détecté atteint la limite de tolérance supérieure ou inférieure (82, 84), est choisi pour la commutation le moyen de commutation partielle (11, 12), dont le courant partiel ($i_{1,k,l}$) est sur le moment le plus grand en termes de valeur.

4. Procédé selon l'une quelconque des revendications précédentes,
   **caractérisé en ce que**
   il est surveillé si le courant cumulé ($i_{1,k,l}$+$i_{2,k,l}$) n'a pas quitté la bande de tolérance (80) après avoir atteint la limite de tolérance supérieure ou inférieure (82, 84) et après une commutation ainsi déclenchée d'un des moyens de commutation partielle (11, 12), dans lequel au moins un autre moyen de commutation partielle (11, 12) est commuté quand le courant cumulé ($i_{1,k,l}$+$i_{2,k,l}$) a quitté la bande de tolérance (80), en particulier quand le courant cumulé ($i_{1,k,l}$+$i_{2,k,l}$) a atteint une limite supérieure étendue ou une limite inférieure étendue d'une bande de contrôle entourant la bande de tolérance (80).

5. Procédé selon l'une quelconque des revendications précédentes,
   **caractérisé en ce que**
   un écart de la bande de différence (86) entre une limite de différence supérieure et une limite de différence inférieure (88, 90) est plus grand qu'un écart de la bande de tolérance (80) entre une limite de tolérance supérieure et une limite de tolérance inférieure (82, 84), en particulier qu'un rapport de bande est réglable en tant que rapport entre l'écart de la bande de tolérance (80) et l'écart de la bande de différence (86) et en particulier est supérieur à 1,5, en particulier supérieur à 2.

6. Procédé selon l'une quelconque des revendications précédentes,
   **caractérisé en ce que**
   la bande de tolérance (80) et/ou la bande de différence (86) sont variables, en particulier que la limite de tolérance supérieure et la limite de tolérance inférieure (82, 84) sont variables et/ou l'écart de la bande de tolérance (80) entre la limite de tolérance supérieure et la limite de tolérance inférieure (82, 84) et/ou l'écart de la bande de différence (86) entre la limite de différence supérieure et la limite de différence inférieure (88, 90) sont variables.

7. Procédé selon l'une quelconque des revendications précédentes,
   **caractérisé en ce que**
   chaque moyen de commutation partielle (11, 12) présente une sortie de courant pour envoyer le courant partiel ($i_{1,k,l}$) et une bobine d'arrêt électrique pour guider le courant partiel ($i_{1,k,l}$) est disposée sur chaque sortie de courant et les bobines d'arrêt (D1 à D6) sont couplées magnétiquement.

8. Procédé selon l'une quelconque des revendications précédentes,
   **caractérisé en ce que**

   - plusieurs moyens de commutation partielle (11, 12) sont regroupés en un dispositif d'onduleur et le dispositif d'onduleur envoie en tant que courant de sortie le courant cumulé ($i_{1,k,l}$+$i_{2,k,l}$), et
   - plusieurs dispositifs d'onduleur sont commutés de manière parallèle et leurs courants de sortie sont superposés en un courant total, en particulier pour injecter le courant total dans un réseau d'alimentation électrique.

9. Procédé selon l'une quelconque des revendications précédentes,
   **caractérisé en ce que**

respectivement deux moyens de commutation partielle (11, 12) sont regroupés en un ou en le dispositif d'onduleur de telle sorte que précisément deux courants partiels ($i_{1,k,l}$, $i_{2,k,l}$) se superposent en un courant cumulé ($i_{1,k,l}+i_{2,k,l}$), dans lequel en particulier chaque dispositif d'onduleur présente deux bobines d'arrêt (D1, D2) couplées magnétiquement en tant que bobines d'arrêt de sortie.

10. Procédé selon l'une quelconque des revendications précédentes,
**caractérisé en ce que**
deux ou les deux commutations partielles coopèrent de telle sorte

- qu'elles génèrent deux courants partiels ($i_{1,k,l}$, $i_{2,k,l}$) qui sont superposés en le courant cumulé ($i_{1,k,l}+i_{2,k,l}$), et
- chacune des deux commutations partielles peut commuter entre une position de commutateur supérieure et une position de commutateur inférieure, dans lequel
- le courant cumulé ($i_{1,k,l}+i_{2,k,l}$) augmente quand les deux unités de commutation partielle sont dans la position de commutateur supérieure et adoptent ainsi conjointement une position positive,
- le courant cumulé ($i_{1,k,l}+i_{2,k,l}$) diminue quand les deux unités de commutation partielle sont dans la position de commutateur inférieure et adoptent ainsi conjointement une position négative, et
- le courant cumulé ($i_{1,k,l}+i_{2,k,l}$) ne varie pas ou peu quand les deux unités de commutation partielle sont dans des positions de commutateur différentes et adoptent ainsi conjointement une position neutre.

11. Procédé selon la revendication 10,
**caractérisé en ce que**

- il est possible de choisir pour moduler le courant cumulé ($i_{1,k,l}+i_{2,k,l}$) entre un fonctionnement à trois points supérieur, un fonctionnement à trois points inférieur et un fonctionnement à deux points, dans lequel
- une commutation est effectuée entre la position positive et la position neutre dans le fonctionnement à trois points supérieur,
- une commutation est effectuée entre la position négative et la position neutre dans le fonctionnement à trois points inférieur, et
- une commutation est effectuée entre la position positive et la position négative dans le fonctionnement à deux points.

12. Procédé selon la revendication 11,
**caractérisé en ce que**

une modulation dans le fonctionnement à deux points a lieu lors d'une transition depuis une modulation dans le fonctionnement à trois points supérieur vers une modulation dans le fonctionnement à trois points inférieur.

13. Procédé selon la revendication 11 ou 12, **caractérisé en ce que**
est fait le choix entre la modulation dans le fonctionnement à trois points supérieur et la modulation dans le fonctionnement à trois points inférieur et la modulation dans le fonctionnement à deux points en fonction d'une tension de réseau d'un réseau électrique, dans lequel l'injection est censée être faite, et/ou en fonction d'une position de phase du courant cumulé ($i_{1,k,l}+i_{2,k,l}$) par rapport à la tension de réseau.

14. Procédé selon l'une quelconque des revendications précédentes,
**caractérisé en ce que**
chaque moyen de commutation partielle (11, 12) génère un courant partiel triphasé ($i_{1,k,l}$) et en particulier chaque dispositif d'onduleur envoie un courant cumulé triphasé ($i_{1,k,l}+i_{2,k,l}$), en particulier que chaque courant triphasé est transformé dans un système transformé, en particulier dans un système $\alpha/\beta/0$, et qu'en particulier un calcul d'un ou du courant de différence ($i_d$) est effectué dans le système transformé.

15. Procédé selon l'une quelconque des revendications précédentes,
**caractérisé en ce que**
le courant cumulé ($i_{1,k,l}+i_{2,k,l}$) ou un ou le courant total composé de plusieurs courants cumulés ($i_{1,k,l}+i_{2,k,l}$) est injecté dans un réseau d'alimentation électrique de sorte que le procédé est réalisé pour générer un courant alternatif électrique en tant que procédé d'injection d'une puissance électrique dans un réseau d'alimentation électrique.

16. Onduleur (2) pour générer un courant alternatif électrique comprenant

- au moins un circuit intermédiaire à tension continue avec une première et une deuxième tension continue,
- plusieurs moyens de commutation partielle (11, 12) respectivement pour générer un courant partiel ($i_{1,k,l}$), dans lequel
- chaque moyen de commutation partielle (11, 12) est préparé pour moduler par des impulsions de tension le courant partiel ($i_{1,k,l}$) en ce que le moyen de commutation partielle (11, 12) est préparé pour générer les impulsions de tension par la commutation entre la première et la deuxième tension continue,
- un moyen de superposition (16) pour superposer les courants partiels ($i_{1,k,l}$, $i_{2,k,l}$) en un courant cumulé $(i_{1,k,l}+i_{2,k,l})$ ,
- un moyen de détection de courant pour détecter le courant cumulé $(i_{1,k,l}+i_{2,k,l})$,
- un moyen d'envoi pour envoyer le courant cumulé $(i_{1,k,l}+i_{2,k,l})$ en tant que le courant alternatif à générer,
- un moyen de calcul de processus pour spécifier une bande de tolérance (80) pour le courant cumulé $(i_{1,k,l}+i_{2,k,l})$ avec une limite de tolérance supérieure et une limite de tolérance inférieure (82, 84),
- un moyen de commande préparé pour commander chaque moyen de commutation partielle (11, 12) en fonction du courant cumulé $(i_{1,k,l}+i_{2,k,l})$ détecté et en fonction de la limite de tolérance (82, 84), dans lequel
- le moyen de commande est relié de manière fonctionnelle au moyen de calcul de processus pour commander les moyens de commutation partielle (11, 12) par un guidage par le moyen de calcul de processus,
et
- le moyen de calcul de processus et le moyen de commande sont préparés de telle sorte que la commutation des plusieurs moyens de commutation partielle (11, 12) selon l'une quelconque des revendications 1 à 15 est effectuée au moins en partie, en particulier majoritairement de manière non synchrone les uns par rapport aux autres.

17. Onduleur (2, 402) selon la revendication 16, **caractérisé en ce que**
l'onduleur (2, 402), en particulier le moyen de calcul de processus, est préparé pour être couplé à d'autres onduleurs (2, 402) du même type en particulier de telle sorte que le courant cumulé $(i_{1,k,l}+i_{2,k,l})$ envoyé est superposé à d'autres courants cumulés en un courant global.

18. Onduleur (2, 402) selon la revendication 16 ou 17, **caractérisé en ce que**
une bobine d'arrêt est branchée entre chaque moyen de commutation partielle (11, 12) et le moyen de superposition (16) et ces bobines d'arrêt sont couplées magnétiquement.

19. Onduleur (2, 402) selon l'une quelconque des revendications 16 à 18,
**caractérisé en ce que**
il présente précisément deux moyens de commutation partielle (11, 12).

20. Ensemble d'injection avec plusieurs onduleurs (2, 402) selon l'une quelconque des revendications 16 à 19, dans lequel les onduleurs (2, 402) sont commutés en parallèle sur leurs moyens d'envoi de telle sorte que les courants cumulés se superposent en un courant global.

21. Ensemble d'injection selon la revendication 20, **caractérisé en ce que**
les onduleurs (2, 402), en particulier leurs moyens de calcul de processus, sont couplés entre eux pour échanger des informations pour coordonner la génération des courants cumulés entre les onduleurs (2, 402).

22. Eolienne (100) avec un rotor aérodynamique (106) et un générateur pour générer une puissance électrique à partir du vent et pour injecter la puissance en tant que courant électrique dans un réseau d'alimentation électrique, dans laquelle l'éolienne (100) présente pour générer le courant électrique au moins un onduleur (2, 402) selon l'une quelconque des revendications 16 à 19 et/ou au moins un ensemble d'injection selon l'une quelconque des revendications 20 et 21.

Fig. 1

Fig. 2

Fig. 3

Fig. 4

Fig. 5

Fig. 6

Fig. 7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 102014219052
- DE 4023207 C1
- DE 102014219052 A1
- US 20070273338 A1
- EP 0600312 A2

### In der Beschreibung aufgeführte Nicht-Patentliteratur

- **VON M. MEYER et al.** A Hysteresis Current Control for Parallel Connected Line-Side Converters of an Inverter Locomotive. *CONTROL IN POWER ELECTRONICS. BRIGHTON,* 13. September 1993
- PROCEEDINGS OF THE EUROPEAN CONFERENCE ON POWER ELECTRONICS AND APPLICATIONS], LONDON. IEE, 13. September 1993, vol. 4, 102-109
- Use of Hybrid PWM and Passive Resonant Snubber for a Grid-Connected CSI. IEEE TRANSACTIONS ON POWER ELECTRONICS. INSTITUTE OF ELECTRICAL AND ELECTRONICS ENGINEERS, Februar 2010, vol. 24, 298-309